(19) Europäisches Patentamt
European Patent Office
Office européen des brevets

(11) **EP 4 561 214 A1**

(12) **EUROPEAN PATENT APPLICATION**
published in accordance with Art. 153(4) EPC

(43) Date of publication:
**28.05.2025 Bulletin 2025/22**

(21) Application number: **22951408.8**

(22) Date of filing: **18.07.2022**

(51) International Patent Classification (IPC):
**H04W 72/02** (2009.01)

(52) Cooperative Patent Classification (CPC):
**H04W 72/02; H04W 72/25; H04W 72/542;
H04W 72/569; H04W 74/0808**

(86) International application number:
**PCT/CN2022/106323**

(87) International publication number:
**WO 2024/016129 (25.01.2024 Gazette 2024/04)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventors:
• **DING, Yi**
**Dongguan, Guangdong 523860 (CN)**
• **ZHAO, Zhenshan**
**Dongguan, Guangdong 523860 (CN)**
• **ZHANG, Shichang**
**Dongguan, Guangdong 523860 (CN)**
• **MA, Teng**
**Dongguan, Guangdong 523860 (CN)**

(74) Representative: **Novagraaf Technologies
Bâtiment O2
2, rue Sarah Bernhardt
CS90017
92665 Asnières-sur-Seine Cedex (FR)**

(54) **RESOURCE RESELECTION METHOD AND APPARATUS, AND DEVICE, STORAGE MEDIUM AND PROGRAM PRODUCT**

(57) A resource reselection method and apparatus, and a device, a storage medium and a program product, which relate to the technical field of communications. The method comprises: when a target resource meets a first condition, reselecting the target resource, wherein the target resource corresponds to N consecutive time units in a time domain, N is an integer greater than 1, and the first condition comprises at least one of the following: the target resource not being in a first resource set, which resource set is determined according to first sidelink control information; a resource corresponding to the target resource overlapping with a resource determined according to the first sidelink control information, and meeting an RSRP threshold condition; and a priority indicated in the first sidelink control information being higher than the priority of data transmission and/or higher than a priority threshold (910). It can be determined whether selected consecutive resources in a time domain conflict with resources indicated by other terminal devices, or are occupied, and reselection is performed for the resources, such that B2B transmission is supported, thereby facilitating an improvement in the utilization rate of a COT, and facilitating the contention of an SL-U user for a channel.

Reselecting a target resource in a case that the target resource meets a first condition; wherein the target resource corresponds to N consecutive time units in a time domain, N being an integer greater than 1; and
the first condition includes at least one of the following items:
the target resource is not within a first resource set, wherein the first resource set is determined based on first sidelink control information;
a resource corresponding to the target resource is overlapped with a resource determined based on first sidelink control information and meets an RSRP threshold condition; or
a priority indicated in first sidelink control information is higher than a priority of data transmission and/or higher than a priority threshold

FIG. 9

## Description

### TECHNICAL FIELD

Embodiments of the present disclosure relate to the technical field of communications, and in particular, relate to a method and apparatus for resource reselection, and a device, a storage medium, and a program product thereof.

### BACKGROUND

In sidelink (SL) communication, a terminal device may select transmission resources from a resource pool by sensing. With evolution of technologies, further research is required on how to perform resource reselection by the terminal device.

### SUMMARY

Embodiments of the present disclosure provide a method and apparatus for resource reselection, and a device, a storage medium and a program product thereof. The technical solutions are as follows.
According to some embodiments of the present disclosure, a method for resource reselection is provided. The method is applicable to a terminal device, and the method includes:

reselecting a target resource in a case that the target resource meets a first condition; wherein the target resource corresponds to N consecutive time units in a time domain, N being an integer greater than 1; and
the first condition includes at least one of the following items:

the target resource is not within a first resource set, wherein the first resource set is determined based on first sidelink control information;
a resource corresponding to the target resource is overlapped with a resource determined based on first sidelink control information and meets a reference signal received power (RSRP) threshold condition; or
a priority indicated in first sidelink control information is higher than a priority of data transmission and/or higher than a priority threshold.

According to some embodiments of the present disclosure, a method for resource reselection is provided. The method is applicable to a terminal device, and the method includes:

reselecting a target resource in a case that the target resource meets a second condition; wherein the target resource corresponds to N consecutive time units in a time domain, N being an integer greater than 1; and
the second condition includes at least one of the following items:

a resource in the target resource is not within a second resource set, wherein the second resource set is determined based on first sidelink control information;
a resource in the target resource meets a resource exclusion condition; or
a priority indicated in first sidelink control information is higher than a priority of data transmission and/or higher than a priority threshold.

According to some embodiments of the present disclosure, an apparatus for resource reselection is provided. The apparatus includes:

a reselecting module, configured to reselect a target resource in a case that the target resource meets a first condition; wherein the target resource corresponds to N consecutive time units in a time domain, N being an integer greater than 1; and
the first condition includes at least one of the following items:

the target resource is not within a first resource set, wherein the first resource set is determined based on first sidelink control information;
a resource corresponding to the target resource is overlapped with a resource determined based on first sidelink control information and meets an RSRP threshold condition; or
a priority indicated in first sidelink control information is higher than a priority of data transmission and/or higher than a priority threshold.

According to some embodiments of the present disclosure, an apparatus for resource reselection is provided. The apparatus includes:

a reselecting module, configured to reselect a target resource in a case that the target resource meets a second condition; wherein the target resource corresponds to N consecutive time units in a time domain, N being an integer greater than 1; and
the second condition includes at least one of the following items:

a resource in the target resource is not within a second resource set, wherein the second resource set is determined based on first sidelink control information;
a resource in the target resource meets a resource exclusion condition; or
a priority indicated in first sidelink control information is higher than a priority of data transmission and/or higher than a priority threshold.

According to some embodiments of the present disclosure, a terminal device is provided. The terminal device includes a processor and a memory storing one or more computer programs, wherein the processor, when loading and running the one or more computer programs, is caused to perform the method for resource reselection described above.
According to some embodiments of the present disclosure, a computer-readable storage medium is provided. The computer-readable storage medium stores one or more computer programs, wherein the one or more computer programs, when loaded and run by a processor, cause the processor to perform the method for resource reselection described above.
According to some embodiments of the present disclosure, a chip is provided. The chip includes one or more programmable logic circuits and/or one or more program instructions, wherein the chip, when running, is caused to perform the method for resource reselection described above.
According to some embodiments of the present disclosure, a computer program product is provided. The computer program product includes one or more computer instructions stored in a computer-readable storage medium, wherein the one or more computer instructions, when read from the computer-readable storage medium and executed by a processor, cause the processor to perform the method for resource reselection described above.
The technical solutions according to the embodiments of the present disclosure include the following beneficial effects.
In the present disclosure, in a resource reevaluation and a resource preemption check mechanism, the terminal device determines whether selected consecutive resources in the time domain conflict with resources indicated by another terminal device or are occupied, and performs resource reselection on the selected resources to support back-to-back (B2B) transmission, such that a utilization rate of channel occupancy time (COT) is improved, and Unlicensed SL (SL-U) users are facilitated to contend for channels.

## BRIEF DESCRIPTION OF THE DRAWINGS

FIG. 1 is a schematic diagram of a network architecture according to some embodiments of the present disclosure;
FIG. 2 is a schematic diagram of a physical layer structure of SL communication according to some embodiments of the present disclosure;
FIG. 3 is a schematic diagram of time-frequency resource position reservation according to some embodiments of the present disclosure;
FIG. 4 is a schematic diagram of resource sensing and resource selection according to some embodiments of the present disclosure;
FIG. 5 is a schematic diagram of an interlaced resource block (IRB) according to some embodiments of the present disclosure;
FIG. 6 is a schematic diagram of division of a resource block set according to some embodiments of the present disclosure;
FIG. 7 is a schematic diagram of a reevaluation mechanism according to some embodiments of the present disclosure;
FIG. 8 is a schematic diagram of a resource preemption mechanism according to some embodiments of the present disclosure;
FIG. 9 is a flowchart of a method for resource reselection according to some embodiments of the present disclosure;
FIG. 10 is a schematic diagram of resource reselection according to some embodiments shown in FIG. 9;
FIG. 11 is a flowchart of a method for resource reselection according to some other embodiments of the present disclosure;

FIG. 12 is a schematic diagram of resource reselection according to some embodiments shown in FIG. 11;

FIG. 13 is a block diagram of an apparatus for resource reselection according to some embodiments of the present disclosure; and

FIG. 14 is a schematic structural diagram of a terminal device according to some embodiments of the present disclosure.

## DETAILED DESCRIPTION

For clearer descriptions of the objectives, technical solutions, and advantages of the present disclosure, embodiments of the present disclosure are further described in detail hereinafter with reference to the accompanying drawings.

The network architecture and service scenarios described in the embodiments of the present disclosure are intended to describe the technical solutions according to the embodiments of the present disclosure more clearly, but do not constitute any limitation on the technical solutions according to the embodiments of the present disclosure. Those of ordinary skilled in the art understand that, with the evolution of the network architecture and the emergence of new service scenarios, the technical solutions according to the embodiments of the present disclosure are also applicable to similar technical problems.

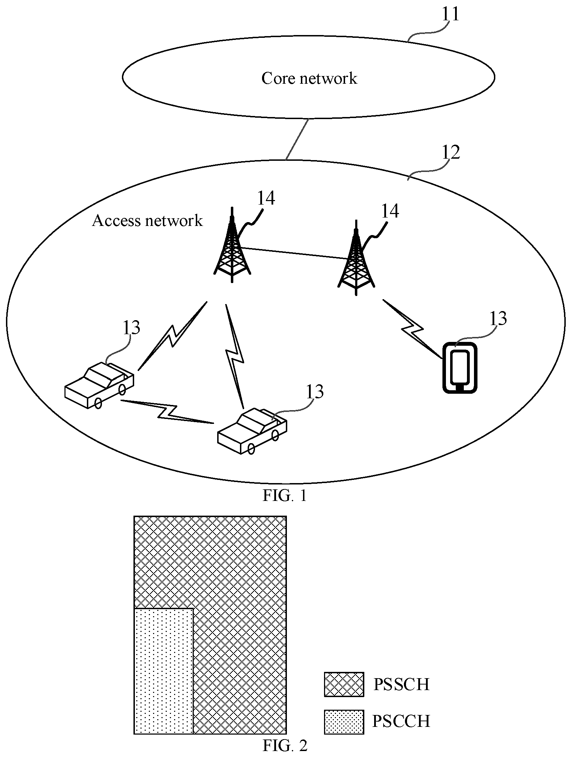

Referring to FIG. 1, a schematic diagram of a network architecture according to some embodiments of the present disclosure is illustrated. The network architecture includes: a core network 11, an access network 12, and terminal devices 13.

The core network 11 includes a plurality of core network devices. The core network devices mainly function to provide user connection, user management, and service bearing, and serve as a bearer network to provide an interface to an external network. For example, the core network of a $5^{th}$ generation mobile communication (5G) new radio (NR) system includes devices such as an access and mobility management function (AMF) entity, a user plane function (UPF) entity, and a session management function (SMF) entity.

The access network 12 includes a plurality of access network devices 14. The access network in the 5G NR system may be referred to as a new generation-radio access network (NG-RAN). The access network devices 14 refer to apparatuses deployed in the access network 12 to provide wireless communication functionality for the terminal devices 13. The access network device 14 includes various forms of macro base stations, micro base stations, relay stations, access points, and the like. The name of the device with the functionality of an access network device varies in systems employing different radio access technologies. For example, the device is referred to as a gNodeB or a gNB in the 5G NR system. With the evolution of communication technologies, the name "access network device" may change. For the convenience of description, the above apparatuses providing the wireless communication functionality for the terminal devices 13 are collectively referred to as the access network device in the embodiments of the present disclosure.

Typically, a plurality of terminal devices 13 are provided, and one or more terminal devices 13 may be distributed in a cell managed by each of the access network devices 14. The terminal devices 13 may include various handheld devices, in-vehicle devices, wearable devices, computing devices, other processing devices connected to a radio modem with the wireless communication functionality, various forms of user devices, mobile stations (MS), and the like. For convenience of description, the devices described above are collectively referred to as the terminal devices. The access network devices 14 communicate with the core network devices using an air technology, such as an NG interface in the 5G NR system. The access network devices 14 communicate with the terminal devices 13 using an air interface technology, such as a Uu interface.

The terminal devices 13 (for example, the in-vehicle device and another device, such as another in-vehicle device, a mobile phone, or a road side unit (RSU)) may communicate with each other over a direct communication interface (for example, a PC5 interface). Accordingly, the communication link established based on the direct communication interface may be referred to as a direct link or SL. The SL transmission means that communication data transmission is carried out directly between the terminal devices over an SL, which is different from a conventional cellular system in which the communication data is received or transmitted by access network devices. The SL transmission has characteristics of short delay and low overhead, and is therefore suitable for communication between two terminal devices that are geographically close to each other, such as an in-vehicle device and another peripheral device that is geographically close to the in-vehicle device. It should be noted that, in FIG. 1, only vehicle-to-vehicle communication in a vehicle to everything (V2X) scenario is illustrated, while the SL technology is applicable to various scenarios in which terminal devices directly communicate with each other. In other words, the terminal device in the present disclosure refers to any device that communicates using the SL technology.

The "5G NR system" in the embodiments of the present disclosure may also be referred to as a 5G system or an NR system, but those skilled in the art can understand the meaning thereof. The technical solutions described in the embodiments of the present disclosure are applicable to the 5G NR system, and also to evolved systems of the 5G NR system.

Before description of the technical solutions of the present disclosure, some background technical knowledge involved in the present disclosure is first explained. The following related technologies may be combined with the technical solutions according to the embodiments of the present disclosure in any manner, all of which fall within the scope of protection of the embodiments of the present disclosure. The embodiments of the present disclosure include at least some of the following content.

1. SL Transmission

Regarding SL transmission, 3GPP has defined two transmission modes.

In mode A, transmission resources of the terminal device are allocated by an access network device (such as a base station). The terminal device transmits communication data over the sidelink based on the transmission resources allocated by the access network device. The access network device may allocate transmission resources to the terminal device for single transmission, or allocate transmission resources to the terminal device for semi-static transmission.

In mode B, the terminal device selects transmission resources from a resource pool autonomously for the transmission of communication data. Specifically, the terminal device may select transmission resources from the resource pool either by sensing or by random selection.

Next, SL communication in NR V2X systems where the terminal device autonomously selects resources (i.e., the mode B described above) is mainly described.

2. NR V2X Physical Layer Structure

A physical layer structure of SL communication in the NR V2X system is shown in FIG. 2. In the structure, a physical sidelink control channel (PSCCH) is configured to bear first stage sidelink control information (SCI) (1st-stage-SCI), and a physical sidelink shared channel (PSSCH) is configured to bear data and second stage SCI (2nd-stage-SCI). The PSCCH and the PSSCH are transmitted in the same slot. The 1st-stage-SCI and the 2nd-stage-SCI may be two pieces of sidelink control information having different functions. For example, the1st-stage-SCI is carried in the PSCCH and mainly includes fields related to resource sensing, facilitating other terminal devices to perform resource exclusion and resource selection upon decoding. In the PSSCH, the 2nd-stage-SCI is further carried in addition to data, and mainly includes fields related to data demodulation, facilitating other terminal devices to demodulate the data in the PSSCH.

3. Resource Reservation in NR V2X

In the NR V2X system, in the mode B described above, the terminal device selects transmission resources autonomously for data transmission. Resource reservation is a prerequisite for resource selection.

The resource reservation means that the terminal device transmits the first sidelink control information (the 1st-stage-SCI described above) in the PSCCH to reserve resources to be used next. The NR V2X system supports intra-transport block (TB) resource reservation and inter-TB resource reservation is supported as well.

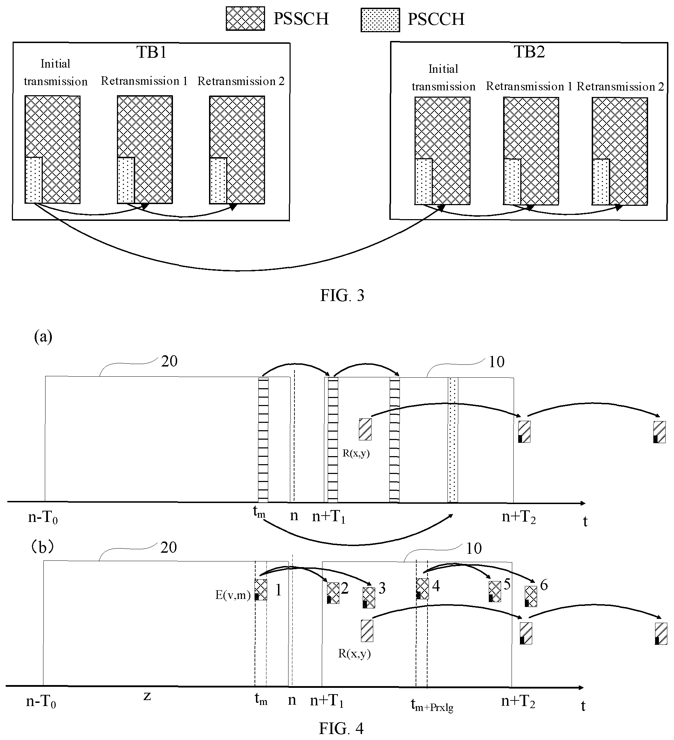

As shown in FIG. 3, the terminal device transmits the first sidelink control information, and indicates N time-frequency resources (including a resource used for current transmission) of a current TB by using the "time resource assignment" and "frequency resource assignment" fields in the first sidelink control information. $N \leq Nmax$, and Nmax is equal to 2 or 3 in NR V2X. Further, the indicated N time-frequency resources should be distributed in W slots. W is equal to 32 in NR V2X. For example, in a TB1 as shown in FIG. 3, the terminal device transmits the first sidelink control information in the PSCCH while transmitting initial transmission data in the PSSCH, and indicates time-frequency resource positions for initial transmission and retransmission 1 (i.e., N=2 in this case) by using the two fields described above. That is, a time-frequency resource for retransmission 1 is reserved. Moreover, initial transmission and retransmission 1 are distributed in 32 slots in a time domain. Similarly, in the TB1 as shown in FIG. 3, the terminal device indicates time-frequency resource positions for retransmission 1 and retransmission 2 using the first sidelink control information transmitted in the PSCCH of retransmission 1, and retransmission 1 and retransmission 2 are distributed in 32 slots in the time domain.

Besides, in transmitting the first sidelink control information, the terminal device performs the inter-TB resource reservation by using a "Resource reservation period" field. For example, in FIG. 3, in transmitting the first sidelink control information of initial transmission of the TB1, the terminal device indicates time-frequency resource positions for initial transmission and retransmission 1 of the TB1 by using the "time resource assignment" and "frequency resource assignment" fields, which are denoted as $\{(t_1, f_1), (t_2, f_2)\}$. $t_1$ and $t_2$ represent the time domain positions of initial transmission and retransmission 1 resources of the TB1, and $f_1$ and $f_2$ represent corresponding frequency domain positions. In the case that a value of the "resource reservation period" field in the first sidelink control information is 100 ms, the SCI simultaneously indicates the time-frequency resources $\{(t_1+100, f_1), (t_2+100, f_2)\}$. The two resources are used for the initial transmission and the retransmission 1 of TB2. Similarly, the first sidelink control information transmitted in retransmission 1 of the TB1 also reserves time-frequency resources for retransmission 1 and retransmission 2 of the TB2 by using the "resource reservation period" field. In NR V2X, the possible values for the "resource reservation period" field are 0, 1-99, 100, 200, 300, 400, 500, 600, 700, 800, 900, and 1000 ms, offering greater flexibility compared to LTE V2X. However, only e values are configured in each resource pool, and the terminal device determines a possible value to be used based on the used resource pool. The e values in the resource pool configuration are denoted as a resource reservation period set M, and exemplarily, e is less than or equal to 16.

In addition, the inter-TB reservation may be activated or deactivated on a resource pool basis by means of network configuration or preconfiguration. In the case that the inter-TB reservation is activated, the first sidelink control information includes the "resource reservation period" field. In the case that the inter-TB reservation is deactivated, the first sidelink control information does not include the "resource reservation period" field. In the case that the inter-TB reservation is activated, the value of the "resource reservation period" field used by the terminal device, i.e., the resource reservation period, is generally not changed prior to trigger of resource reselection. The terminal device reserves resources for a next period by using the "resource reservation period" field in the first sidelink control information for transmission of another TB every time the terminal device transmits the first sidelink control information, such that periodic semi-persistent transmission is achieved.

In the case that the terminal device operates in the mode B, the terminal device may acquire the first sidelink control information transmitted by another terminal device by sensing the PSCCHs from another terminal device to acknowledge the resources reserved by another terminal device. In resource selection, the terminal device excludes the resources reserved by another terminal device to avoid resource collision.

4. Resource Selection Method for NR V2X Sensing

In the NR V2X system, the terminal device needs to select resources autonomously in the mode B.

As shown in FIG. 4, the terminal device triggers resource selection or reselection in a slot n, or the slot n is a slot where a higher layer triggers a physical layer to report a candidate resource set. A resource selection window 10 starts from $n+T_1$ and ends at $n+T_2$. $0 \leq T_1 \leq T_{proc,1}$, and $T_{proc,1}$ is 3, 5, 9, or 17 slots in the case that the subcarrier spacing is 15, 30, 60, or 120 kHz. $T_{2min} \leq T_2 \leq$ a remaining delay budget of service, and a value set of $T_{2min}$ is $\{1, 5, 10, 20\}*2^\mu$ slots. $\mu=0, 1, 2,$ or 3, which correspond to the subcarrier spacing being 15, 30, 60, or 120 kHz, respectively. The terminal device determines $T_{2min}$ from the value set based on a priority of its own to-be-transmitted data. For example, in the case that the subcarrier spacing is 15 kHz, the terminal device determines $T_{2min}$ from the set $\{1, 5, 10, 20\}$ based on the priority of its own to-be-transmitted data. In the case that $T_{2min}$ is greater than or equal to the remaining delay budget of service, $T_2$ is equal to the remaining delay budget of service. The remaining delay budget means a difference between a corresponding time of a delay requirement of the data and a current time. For example, for a packet arriving in the slot n, the delay requirement is 50 ms. Assuming that one slot is 1 ms, then the remaining delay budget is 50 ms in the case that the current time is the slot n, and the remaining delay budget is 30 ms in the case that the current time is a slot n+20.

The terminal device senses resources from $n-T_0$ to $n-T_{proc,0}$ (excluding $n-T_{proc,0}$), and a value of $T_0$ is 100 or 1100 ms. In the case that the subcarrier spacing is 15, 30, 60, or 120 kHz, $T_{proc,0}$ is 1, 1, 2, or 4 slots. In some embodiments, the terminal device senses resources in a slot that is within a resource pool used by the terminal device within a resource sensing window. In some embodiments, the terminal device senses the first sidelink control information transmitted by another terminal device in each slot (except for its own transmission slot), and the terminal device uses the results of resource sensing in $n-T_0$ to $n-T_{proc,0}$ upon trigger of resource selection or reselection in the slot n.

In step 1, the terminal device regards all available resources within the resource pool used by the terminal device in the resource selection window 10 as a resource set A, and any of the resources in the set A is denoted as the resource R(x,y). x and y respectively indicate a frequency domain position and a time domain position of the resource. An initial number of the resources in the set A is denoted as $M_{total}$. The terminal device excludes resources in the resource set A based on a non-sensing slot in the resource sensing window 20 (step 1-1) and/or resource sensing results in the resource sensing window 20 (step 1-2). The terminal device determines whether the resource R(x,y) or a series of periodic resources corresponding to the resource R(x,y) is overlapped with a slot determined based on the non-sensing slot in step 1-1 or a resource determined based on the sensed first sidelink control information in step 1-2, and excludes the resource R(x,y) from the resource set A in the case that they are overlapped with each other.

In step 1-1, in the case that the terminal device transmits data in the slot $t_m$ within the resource sensing window 20 and does not carry out sensing, the terminal device determines corresponding Q slots based on the slot $t_m$ and each allowed resource reservation period in the resource pool used by the terminal device, having the resource reservation period as an interval. In the case that the Q slots are overlapped with the resource R(x,y) or the series of periodic resources corresponding to the resource R(x,y), the resource R(x,y) is excluded from the resource set A. Q=1 or Q=[Tscal/Prx] (for rounding up). Tscal is equal to a value of $T_2$ converted into milliseconds. Prx is one of the resource reservation periods allowed by the resource pool used by the terminal device. In some embodiments, a series of periodic resources corresponding to the resource R(x,y) are R(x,y+j*Ptxlg), j=0,1,2,···,Cresel-1. The Cresel is related to a random count value generated by the terminal device, and Ptxlg is the number of logical slots converted from Ptx. Ptx is the resource reservation period of the terminal device. for example, the case that the Cresel is equal to 3 in FIG. 4(a) means three periodic resources corresponding to the resource R(x,y) (including the resource R(x,y)).

For example, in FIG. 4(a), the terminal device does not carry out sensing in the slot $t_m$, but performs resource exclusion in sequence based on each resource reservation period in the resource reservation period set M in the used resource pool configuration. For a resource reservation period 1, assuming that the Q value is calculated as 2, then the corresponding Q slots are two following slots mapped from the slot $t_m$ in FIG. 4(a) as indicated by a horizontal line shadow, having the resource reservation period 1 as an interval. For a resource reservation period 2, assuming that the Q value is calculated as 1, then the corresponding Q slots are one following slot mapped from the slot $t_m$ in FIG. 4(a) as indicated by a dotted shadow, having the resource reservation period 2 as an interval.

The terminal device determines whether Q slots corresponding to each reservation period are overlapped with the resource R(x,y) or a series of periodic resources corresponding to the resource R(x,y), and excludes the resource R(x,y) from the resource set A in the case that these resources are overlapped with each other.

In some embodiments, in the case that the inter-TB reservation is deactivated for the resource pool used by the terminal device, the terminal device does not perform step 1-1.

In some embodiments, upon completion of step 1-1, in the case that the number of remaining resources in the resource set A is less than $M_{total}*X$, the resource set A is initialized into all available resources within the resource pool used by the terminal device in the resource selection window 10, and then step 1-2 is performed.

In step 1-2, in the case that the terminal device senses the first sidelink control information transmitted in the PSCCH within the slot $t_m$ of the resource sensing window 20, a sidelink reference signal received power (SL-RSRP) of the PSCCH or an SL-RSRP of the PSSCH scheduled by the PSCCH (that is, the SL-RSRP of the PSCCH transmitted in the same slot as the PSCCH) is measured.

In the case that the measured SL-RSRP is greater than an SL-RSRP threshold and the first sidelink control information received by the terminal device includes the "resource reservation period" field, the terminal device determines the corresponding Q slots based on the slot $t_m$ and the resource reservation period carried in the sensed first sidelink control information, having the resource reservation period as an interval. The terminal device assumes that the first sidelink control information with the same content is received in the Q slots. The terminal device determines whether the resources indicated in the "time resource assignment" and "frequency resource assignment" fields of the first sidelink control information received in the slot $t_m$ and the Q pieces of the first sidelink control information assumed to be received are overlapped with the resource R(x,y) or a series of periodic resources corresponding to the resource R(x,y), and excludes the corresponding resource R(x,y) from the set A in the case that they are overlapped with each other. The above Q=1 or Q=[Tscal/Prx] (for rounding up). Tscal is equal to a value of $T_2$ converted into milliseconds. Prx is the resource reservation period carried in the sensed first sidelink control information. In some embodiments, a series of periodic resources corresponding to the resource R(x,y) are R(x,y+j*Ptxlg), j=0,1,2,···,Cresel-1. The Cresel is related to a random count value generated by the terminal device, and Ptxlg is the number of logical slots converted from Ptxx. Ptx is the resource reservation period of the terminal device. for example, the case that the Cresel is equal to 3 in FIG. 4(b) means three periodic resources corresponding to the resource R(x,y) (including the resource R(x,y)).

For example, in FIG. 4(b), in the case that the first sidelink control information received by the terminal device includes the "resource reservation period" field, the terminal device senses the first sidelink control information in the PSCCH in the slot $t_m$ resource E(v,m), having the resource reservation period in the field being Prx. Assuming that the Q value is calculated as 1, then the terminal device assumes that the first sidelink control information with the same content is also received in the slot $t_{m+Prxlg}$. The terminal device determines whether the resources 1, 2, 3, 4, 5, and 6 indicated in the "time resource assignment" and "frequency resource assignment" fields of the first sidelink control information received in the slot $t_m$ and the first sidelink control information assumed to be received in the slot $t_{m+Prxlg}$ are overlapped with the resource R(x,y) or a series of periodic resources corresponding to the resource R(x,y), and excludes the resource R(x,y) from the resource set A in the case that these resources are overlapped with each other and the RSRP condition is met.

In the case that the SL-RSRP measured by the terminal device is greater than the SL-RSRP threshold and the first sidelink control information received by the terminal device does not include the "resource reservation period" field, the terminal device only determines whether the resource indicated in the "time resource assignment" and "frequency resource assignment" fields of the first sidelink control information received in the slot $t_m$ is overlapped with the resource R(x,y) or a series of resources corresponding to the resource R(x,y), and excludes the resource R(x,y) from the resource set A in the case that these resources are overlapped with each other.

For example, in FIG. 4(b), in the case that the first sidelink control information received by the terminal device does not include the "resource reservation period" field, and the terminal device senses the first sidelink control information in the PSCCH in the slot $t_m$ resource E(v,m), the terminal device determines whether the resources 1, 2, and 3 indicated in the "time resource assignment" and "frequency resource assignment" fields in the first sidelink control information are overlapped with the resource R(x,y) or a series of periodic resources corresponding to the resource R(x,y), and excludes the resource R(x,y) from the resource set A in the case that these resources are overlapped with each other and the RSRP condition is met.

In the case that the number of the remaining resources in the resource set A upon the resource exclusion is less than $M_{total}$*X, the SL-RSRP threshold is raised by 3 dB, and step 1 is performed again. The physical layer reports the resource set A upon resource exclusion to a higher layer as a candidate resource set.

In step 2, the higher layer randomly selects resources from the reported candidate resource set for data transmission. That is, the terminal device randomly selects resources from the candidate resource set for data transmission.

It should be noted that:

1. The RSRP threshold is determined based on the priority P1 carried in the PSCCH sensed by the terminal device and the priority P2 of the data to be transmitted by the terminal device. The configuration of the resource pool used by the terminal device includes an SL-RSRP threshold table, and the SL-RSRP threshold table includes SL-RSRP thresholds corresponding to all priority combinations. The configuration of the resource pool may be configured on the network or preconfigured.

For example, as listed in Table 1, it is assumed that the selectable values of the priority levels of both P1 and P2 are 0 to 7, the SL-RSRP thresholds corresponding to different priority combinations are represented by $\gamma_{ij}$. In $\gamma_{ij}$, i is a value of the priority level P1, and j is a value of the priority level P2.

Table 1: SL-RSRP threshold table

| P2<br>P1 | 0 | 1 | 2 | 3 | 4 | 5 | 6 | 7 |
|---|---|---|---|---|---|---|---|---|
| 0 | $\gamma_{00}$ | $\gamma_{01}$ | $\gamma_{02}$ | $\gamma_{03}$ | $\gamma_{04}$ | $\gamma_{05}$ | $\gamma_{06}$ | $\gamma_{07}$ |
| 1 | $\gamma_{10}$ | $\gamma_{11}$ | $\gamma_{12}$ | $\gamma_{13}$ | $\gamma_{14}$ | $\gamma_{15}$ | $\gamma_{16}$ | $\gamma_{17}$ |
| 2 | $\gamma_{20}$ | $\gamma_{21}$ | $\gamma_{22}$ | $\gamma_{23}$ | $\gamma_{24}$ | $\gamma_{25}$ | $\gamma_{26}$ | $\gamma_{27}$ |
| 3 | $\gamma_{30}$ | $\gamma_{31}$ | $\gamma_{32}$ | $\gamma_{33}$ | $\gamma_{34}$ | $\gamma_{35}$ | $\gamma_{36}$ | $\gamma_{37}$ |
| 4 | $\gamma_{40}$ | $\gamma_{41}$ | $\gamma_{42}$ | $\gamma_{43}$ | $\gamma_{44}$ | $\gamma_{45}$ | $\gamma_{46}$ | $\gamma_{47}$ |
| 5 | $\gamma_{50}$ | $\gamma_{51}$ | $\gamma_{52}$ | $\gamma_{53}$ | $\gamma_{54}$ | $\gamma_{55}$ | $\gamma_{56}$ | $\gamma_{57}$ |
| 6 | $\gamma_{60}$ | $\gamma_{61}$ | $\gamma_{62}$ | $\gamma_{63}$ | $\gamma_{64}$ | $\gamma_{65}$ | $\gamma_{66}$ | $\gamma_{67}$ |
| 7 | $\gamma_{70}$ | $\gamma_{71}$ | $\gamma_{72}$ | $\gamma_{73}$ | $\gamma_{74}$ | $\gamma_{75}$ | $\gamma_{76}$ | $\gamma_{77}$ |

In the case that the terminal device senses the PSCCH transmitted by another terminal device, the terminal device acquires the priority P1 carried in the first sidelink control information transmitted in the PSCCH and the priority P2 of the to-be-transmitted data, and determines an SL-RSRP threshold by looking up in Table 1.

2. Whether the terminal device compares the measured PSCCH-RSRP or a PSSCH-RSRP scheduled by the PSCCH with the SL-RSRP threshold depends on the resource pool configuration of the resource pool used by the terminal device. The resource pool configuration may be configured on the network or preconfigured.

3. The value of X described above is possibly {20%, 35%, 50%}. The configuration of the resource pool used by the terminal device includes correspondence between the priorities and the possible values described above, and the terminal device determines the value of X based on the priority of the to-be-transmitted data and the correspondence. The resource pool configuration may be configured on the network or preconfigured.

4. The resource reservation period is converted into logical slots.

As mentioned above, the terminal device transmits the first sidelink control information to indicate time-frequency resources to reserve resources to be used next. In sensing, the terminal device for resource selection decodes the first sidelink control information transmitted by another terminal device to acquire resources reserved by another terminal device, and then excludes the corresponding resources during resource selection to avoid resource collision. In resource exclusion, the terminal device for resource selection converts a physical time (for example, 100 ms) indicated in the "resource reservation period" field in the decoded first sidelink control information into a corresponding number of logical slots, and then performs resource exclusion by using the number of the logical slots:

$$P'_{\text{rsvp}} = \left\lceil \frac{T'_{max}}{10240\ ms} \times P_{\text{rsvp}} \right\rceil$$

In the above formula, Prsvp represents a resource reservation period, for example, a resource reservation period indicated in the "resource reservation period" in the first sidelink control information sensed by the terminal device, or a resource reservation period allowed in the resource pool, or a resource reservation period of the terminal device, and P'rsvp represents a corresponding calculated number of logical slots. T'max represents the number of slots within a resource pool or a transmission resource pool of the terminal device in a system frame number (SFN) period or in 10240 ms.

The above description is for the SL communication method in NR-V2X. That is, the terminal device autonomously selects transmission resources by resource sensing and autonomously performs data transmission on the sidelink. The SL communication method is applicable to various SL communications such as direct communication between handheld terminals and direct communication between pedestrians and vehicles.

5. Physical Layer Structure of SL-U

In the case that the NR SL technology operates in the unlicensed spectrum, regulatory requirements in relevant areas, such as occupied channel bandwidth (OCB) and power spectral density (PSD) requirements, need to be considered in the system design. For example, for unlicensed spectrum within the 5 GHz frequency range, European regulatory requirements include minimum OCB and maximum PSD requirements. For the OCB requirement, the occupied channel bandwidth should not be less than 80% of the total channel bandwidth in the case that the terminal device uses the channel for data transmission, and for SL-U, reference may be made to the IRB structure in NR-U to meet the OCB occupancy requirement. For example, the 80% bandwidth requirement herein means that a span between a lowest PRB and a highest PRB accounts for 80% of the total bandwidth. 80% of the total bandwidth is occupied in the case of continuous occupancy of the frequency domain in FIG. 2, and therefore data of only one user can be transmitted in one slot. Based on the interlaced structure, the frequency domain continuous occupancy in FIG. 2 changes to discrete occupancy, such that 80% of the span is ensured without actually occupying 80% of the bandwidth.

One interlaced resource includes N discrete PRBs in the frequency domain, M interlaced resources are in the frequency band range, and PRBs in the $m^{th}$ interlace is {m, M+m, 2M+m, 3M+m, ...}.

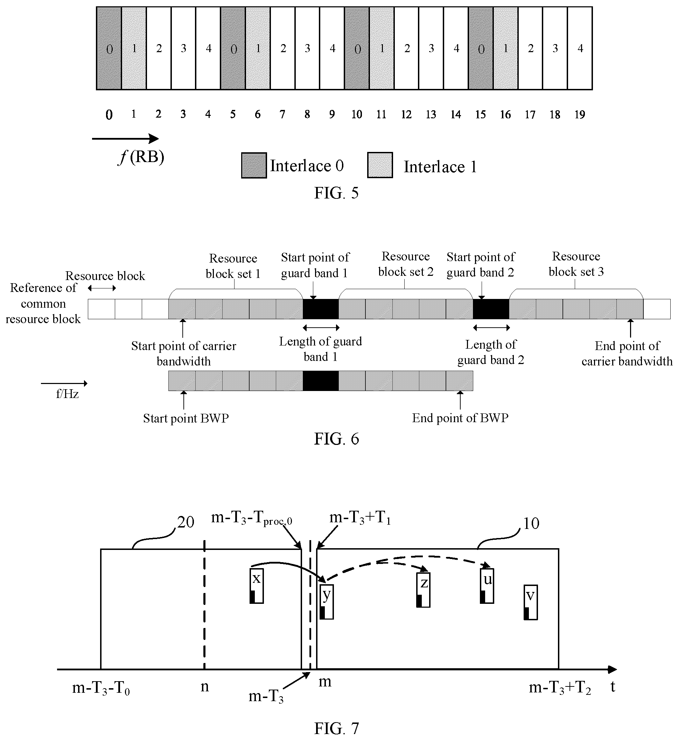

As shown in FIG. 5, the system bandwidth includes 20 PRBs (one PRB corresponds to 12 subcarriers) and five interlaces (that is, M=5). Each interlace includes four PRBs (that is, N=4). The frequency domain intervals between two adjacent PRBs in the interlace are the same, that is, five PRBs. The numbers in the box in the drawings represent the interlace index. It should be noted that the PRB in the interlace is also referred to as an IRB, and the interlace is also referred to as the IRB.

In addition to the IRB structure, the resource block (RB) set is also introduced in the SL-U.

The frequency domain resources on the carrier are organized into a plurality of RB sets, and guard frequency bands (guard bands for short) are configured or not configured between the RB sets. For example, an RB set corresponds to a frequency domain width of 20 MHz. The communication device needs to perform listen before talk (LBT) on the unlicensed spectrum, and the data is transmitted upon success of the LBT. The LBT is performed based on the granularity of one RB set, and thus one RB set is also referred to as an LBT sub-band. In the case that the communication device transmits data on the RB set, the LBT needs to be performed on the corresponding RB set, and the data is transmitted upon success of the LBT. One RB set includes a plurality of IRBs. For simplicity, in FIG. 6, one resource block actually corresponds to one IRB in FIG. 5. In general, the BWP configured for the communication device includes an integer number of RB Sets.

In the SL-U, in one possible design, the resource pool contains an integer number of RB sets (and guard bands between the RB sets), and each RB set includes a plurality of IRBs. Furthermore, the concept of sub-channels in the resource pool continues to be used, that is, a sub-channel is defined as one or more IRBs, or, the terminal device transmits directly on one or more IRBs without using the sub-channel.

6. Specific Classification of the LBT

In type 1, a random count value is generated. In the case that a listening slot is idle, 1 is subtracted from the random count value. In the case that a listening slot is active, no subtraction is performed for the random count value. In the case that the random count value is subtracted to 0, the channel is accessible and data transmission is allowed thereon. In the case that the random count value is subtracted to 0 and the communication device has not data to transmit, the random count value does not need to be generated again, and the LBT with a fixed time length only needs to be performed in the case that the communication device needs to transmit data. In the case that the LBT is successful, that is, the channel is idle within the fixed time length, the channel is accessed.

In type 2A, the communication device listens channels with a length of 25 microseconds (denoted as Tshort). In the case that all listening slots within the Tshort are idle, the communication device may directly access the channel.

In type 2B, the communication device listens channels with a length of 16 microseconds (denoted as Tf). In the case that the listening slots within the Tf are idle, the communication device may directly access the channel.

7. B2B transmission

Based on the above description, in the unlicensed spectrum, the communication device needs to perform the LBT first, and the channel is accessed only upon success of the LBT. In the case that the LBT of the communication device is successfully and the channel is accessed, the time of occupying the channel is referred to as the COT. Within the COT, the communication device transmits continuously or non-continuously. Therefore, the B2B transmission is introduced into the SL-U to fully utilize the COT initiated upon success of the LBT. That is, the communication device continuously transmits in a plurality of slots to improve the utilization of the COT. Simultaneous and continuous using/occupancy of the channel also facilitates contention for the channel with another system. For example, in the case that the SL-U terminal adopts the B2B transmission, wireless fidelity (Wi-Fi) users cannot successfully access the channel simultaneously due to continuous channel occupancy.

8. Reevaluation and Preemption Mechanisms in NR V2X

Upon the resource selection, the NR-V2X also supports the reevaluation of the resources selected by not indicated by transmission of the first sidelink control information.

As shown in FIG. 7, resources x, y, z, u, and v are time-frequency resources that have been selected by the terminal device in slot n, and the resource y is located in slot m. For the resources z and u, which the terminal device is about to indicate for the first time by transmitting the first sidelink control information in the resource y (the resource y has been previously indicated in the first sidelink control information in the resource x), the terminal device performs step 1 described above at least once in slot $m-T_3$. That is, at least in slot $m-T_3$, the terminal device determines the resource selection window 10 and the resource sensing window 20 as described above, and performs step 1 to exclude resources within the resource selection window 10 to acquire a candidate resource set. In the case that the resources z and/or u are not in the candidate resource set, the terminal device performs step 2 to reselect the time-frequency resource from the resources z and u that is not in the candidate resource set. Depending on practice of the terminal device, the terminal device may also reselect any resource already selected but not indicated by transmission of the first sidelink control information, such as any one or more of the resources z, u, and v. $T_3$ is equal to $T_{proc,1}$. In FIG. 7, the dashed arrow indicates that the first sidelink control information indication is to be transmitted for indication, and the solid arrow indicates that the first sidelink control information indication has already been transmitted for indication.

In addition, the NR-V2X also supports a resource preemption mechanism. In the NR-V2X, conclusions about the resource preemption mechanism are described from the perspective of a terminal whose selected resources are preempted. Upon resource selection, the terminal device continuously senses the first sidelink control information. In the case that a resource selected and indicated by transmission of the first sidelink control information meets the following three conditions, the resource has been preempted by another terminal device, and the terminal device triggers resource reselection for the resource:

1. The resource that have been selected and indicated by the terminal device is not in the candidate resource set.
2. The resource indicated in the sensed first sidelink control information is overlapped with the resource that have been selected and indicated by the terminal device, and the SL-RSRP of the PSCCH corresponding to the sensed first sidelink control information or the SL-RSRP of the PSSCH scheduled by the PSCCH is greater than the SL RSRP threshold.
3. The priority carried in the sensed first sidelink control information is higher than the priority of the data to be transmitted by the terminal device. Alternatively, the priority carried in the sensed first sidelink control information is higher than the priority of the data to be transmitted by the terminal device, and higher than the threshold U. U depends on the resource pool configuration, and the resource pool may be configured on the network or pre-configured.

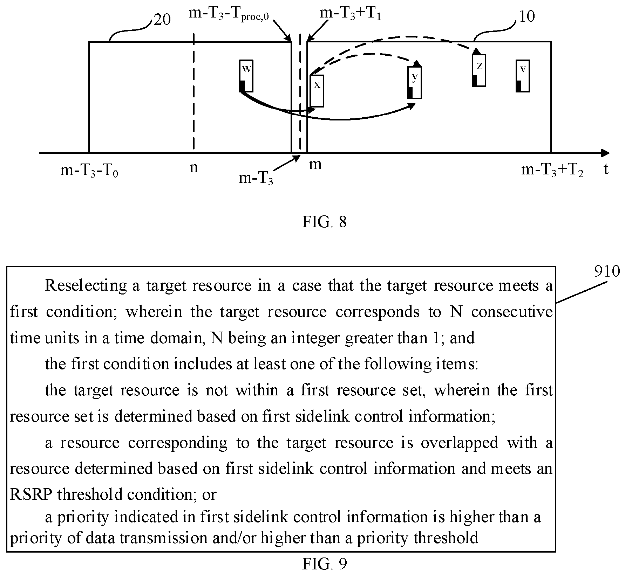

As shown in FIG. 8, resources w, x, y, z, and v are time-frequency resources that have already been selected by the terminal device in slot n, and the resource x is located in slot m. For the resources x and y, which the terminal device is about to indicate by transmitting the first sidelink control information on resource x and have already been indicated in the first sidelink control information previously transmitted by the terminal device, the terminal device performs the step 1 at least once in slot $m-T_3$. That is, the terminal device determines the resource selection window 10 and the resource sensing window 20 at least in slot $m-T_3$ as described above, and performs the step 1 to exclude the available resources within the resource selection window 10 to determine a candidate resource set. In the case that the resources x and/or y meet the aforementioned three conditions, the terminal device performs step 2 to reselect the time-frequency resource from the resources x and y that meets the aforementioned three conditions. In addition, in the case that resource reselection is triggered, depending on the practice of the terminal device, the terminal device may reselect any resource already selected but not indicated by transmission of the first sidelink control information, such as any one or more of the resources z and v. $T_3$ is equal to $T_{proc,1}$.

Based on above description, the B2B transmission is introduced in the SL-U system. That is, the terminal device continuously performs data transmission in a plurality of slots. Therefore, in the case that the terminal device selects consecutive transmission resources in the time domain, how to execute the reevaluation and preemption mechanisms has not been discussed in the standards. For example, in the case that the upper layer configures a B2B transmission set for the physical layer, and the B2B transmission set includes a plurality of consecutive single slot resources in the time domain, how does the lower layer determine and report the reevaluation result and the resource preemption result of the B2B transmission group is discussed. The technical solutions according to the present disclosure are described in conjunction with several embodiments hereinafter.

Referring to FIG. 9, a flowchart of a method for resource reselection according to some embodiments of the present disclosure is illustrated. The method is applicable to the network architecture shown in FIG. 1, such as a terminal device. The method includes following processes.

In S910, a target resource is reselected in a case that the target resource meets a first condition, wherein the target resource corresponds to N consecutive time units in a time domain, N being an integer greater than 1.

The first condition includes at least one of the following items:

the target resource is not within a first resource set, wherein the first resource set is determined based on first sidelink control information;
a resource corresponding to the target resource is overlapped with a resource determined based on first sidelink control information and meets an RSRP threshold condition; or
a priority indicated in first sidelink control information is higher than a priority of data transmission and/or higher than a priority threshold.

In the embodiments of the present disclosure, the target resource corresponds to two or more consecutive time units in the time domain. The "time unit" in the embodiments of the present disclosure may be a slot, a subframe, or any other time unit, which is not limited in the present disclosure. For the "time unit" mentioned elsewhere herein, reference is made to this explanation, which is not repeated herein. Illustratively, the target resource corresponds to N consecutive slots in the time domain, and N is an integer greater than 1.

In some embodiments, the target resource is a selected resource of the terminal device. For example, for the reevaluation mechanism, the target resource is a resource selected by the terminal device but not indicated by transmission of second sidelink control information. For example, for the preemption mechanism, the target resource is a resource selected by the terminal and indicated by transmission of second sidelink control information. The second sidelink control information is sidelink control information transmitted by the terminal device to another terminal device, and the first sidelink control information is sidelink control information received by the terminal device from another terminal device. It should be noted that the first sidelink control information and the second sidelink control information are sidelink control information for resource indication and reservation (that is, the 1st-stage-SCI described above), have the same functionality, include the same information domain, and have the same format.

In some embodiments, for the reevaluation mechanism, the first condition includes the target resource being not within the first resource set. The first resource set is determined based on the first sidelink control information.

In some embodiments, for the preemption mechanism, the first condition includes at least one of the following cases: the target resource is not within the first resource set, and the first resource set is determined based on the first sidelink control information; the resource corresponding to the target resource is overlapped with the resource determined based on the first sidelink control information and meets the RSRP threshold condition; or the priority indicated in the first sidelink control information is higher than the priority of data transmission and/or higher than the priority threshold.

In some embodiments, the first resource set is a resource set acquired by performing resource exclusion based on the sensed first sidelink control information by the terminal device. In some embodiments, the terminal device performs the resource exclusion in following processes.

1. A resource selection window and a resource sensing window are determined.
In some embodiments, the resource selection window is $[n+T_1, n+T_2]$, and the resource sensing window is $[n-T_0, n-T_{proc,0})$. n is a time unit where the higher layer of the terminal device triggers the physical layer to report a candidate resource set, a time unit where the reevaluation is triggered, or a time unit where the resource preemption check is triggered, $T_1$, $T_2$, $T_0$, and $T_{proc,0}$ are set values. For details, reference may be made to above description for details.

2. An initialized resource set is determined, wherein the initialized resource set includes at least one first resource within the resource selection window. The at least one first resource corresponds to N consecutive time units in the time domain.

Illustratively, the resource set is denoted as the resource set A, and the resource set A includes resources within the resource selection window. In some embodiments, all first resources within the resource selection window are initialized as the resource set A. That is, any resource in the resource set A is denoted as the first resource. Illustratively, the first resource is a resource R(x,y). x represents a frequency domain position of the first resource, and y represents a time domain position of the first resource. In some embodiments, x represents a frequency domain start position of the first resource, and y represents a time domain start position of the first resource.

In some embodiments, the first resource corresponding to the N consecutive time units in the time domain means that the first resource corresponds to N consecutive physical time units in the time domain. Using the time unit being the slot as an example, the first resource corresponds to N consecutive physical slots in the time domain.

In some embodiments, the first resource corresponding to the N consecutive time units in the time domain means that the first resource corresponds to N consecutive time units belonging to a resource pool in the time domain. The time unit belonging to the resource pool is also referred to as a logical time unit. That is, the first resource corresponds to N consecutive logical time units in the time domain. Using the time unit being the slot as an example, the first resource corresponds to N consecutive slots belonging to the resource pool in the time domain, or, the first resource corresponds to N consecutive logical slots in the time domain. Illustratively, the resources R(x,y) represent time-frequency resources corresponding to N consecutive slots from the slot y and U consecutive sub-channels or IRBs from the sub-channel or IRB x.

It should be noted that in the case that the time units in the resource pool are consecutive physical time units in the time domain, N consecutive time units belonging to the resource pool corresponding to the first resource in the time domain are N consecutive physical time units; and in the case that the time units in the resource pool are dis consecutive physical time units in the time domain, N consecutive time units belonging to the resource pool corresponding to the first resource in the time domain may be N dis consecutive physical time units.

In addition, N is configured on the network, preconfigured, configured by the higher layer of the terminal device for the physical layer, determined based on practice of the terminal device, or a value predefined in the standard. In some embodiments, N is determined based on at least one of a COT duration, a remaining COT duration, a channel access priority, a priority of data transmission, a channel busy ratio (CBR), or a remaining delay budget. In some embodiments, N is contained in resource pool configuration.

In some embodiments, the first resource corresponds to U consecutive sub-channels or IRBs in a frequency domain. Each of the U consecutive sub-channels includes one or more consecutive IRBs, and U is a positive integer. In the case that U is equal to 1, the first resource corresponds to one sub-channel or IRB in the frequency domain. In the case that U is greater than or equal to 2, the first resource corresponds to U consecutive sub-channels or IRBs in the frequency domain. Illustratively, the U consecutive sub-channels or IRBs are in the same resource block set. In some embodiments, U is configured on the network, preconfigured, configured by the higher layer of the terminal device for the physical layer, determined based on practice of the terminal device, or a value predefined in the standard.

3. Acquiring a first resource set by excluding the first resource from the resource set by a resource exclusion process, wherein the resource exclusion process includes at least one of a first exclusion process or a second exclusion process, wherein the first exclusion process is configured to perform resource exclusion based on a non-sensing time unit within the resource sensing window, and the second exclusion process is configured to perform resource exclusion based on first sidelink control information sensed within the resource sensing window.

In some embodiments, the first exclusion process includes: determining Q1 time units corresponding to the non-sensing time unit based on the non-sensing time unit and each resource reservation period in the resource reservation period set configured in the resource pool or in sub-sets of the resource reservation period set, wherein Q1 is a positive integer; and excluding the first resource from the resource set in the case that the Q1 time units are overlapped with the first resource in the resource set or overlapped with a resource corresponding to the first resource. Illustratively, the resource reservation period set or the subsets of the resource reservation period set is configured on the network, preconfigured, or determined based on practice of the terminal device. Illustratively, the resource corresponding to the first resource is a periodic resource with the same frequency domain position as the first resource and having a fixed time interval from the first resource in a time domain position. In some embodiments, the resource corresponding to the first resource includes the first resource. In some embodiments, the fixed time interval is determined based on the resource reservation period of the terminal device. In some embodiments, the terminal device does not perform the first exclusion process, that is, the terminal device does not perform the process of the resource exclusion on the resource set A based on the non-sensing time unit within the resource sensing window.

In some embodiments, the second exclusion process includes excluding the first resource from the resource set in the case that a resource indicated in the first sidelink control information is overlapped with the first resource in the resource set or overlapped with the resource corresponding to the first resource and meets the RSRP threshold condition.

In some embodiments, the second exclusion process includes determining Q2 time units corresponding to a first time unit based on the first time unit in which the first sidelink control information is sensed and the resource reservation period indicated in the first sidelink control information, and assuming that the first sidelink control information with same content is to be received within the Q2 time units, wherein Q2 is a positive integer; and excluding the first resource from the resource set in the case that a resource indicated in the first sidelink control information that is sensed and assumed to be received is overlapped with the first resource in the resource set or overlapped with a resource corresponding to the first resource and meets the RSRP threshold condition.

In some embodiments, the RSRP threshold condition includes that the RSRP of the PSCCH corresponding to the first sidelink control information or the RSRP of the PSSCH scheduled by the PSCCH is greater than an RSRP threshold.

In some embodiments, the resource indicated in the first sidelink control information is a resource determined based on at least one of:

a first indication field, indicating a time domain position of the resource;
a second indication field, indicating a frequency domain position of the resource;
a third indication field, indicating whether the resource is transmitted by B2B transmission; or
a fourth indication field, indicating a transmission round of B2B transmission. The transmission round can be considered as a position of the resource in the B2B transmission, the number of transmissions of the resource in the B2B transmission, and the like. Illustratively, the fourth indication field indicates a position of the resource corresponding to the first sidelink control information or a resource for transmitting the first sidelink control information in the B2B transmission or the number of transmissions the resources corresponding to the first sidelink control information or a resource for transmitting the first sidelink control information in the B2B transmission.

In some embodiments, the resource indicated in the first sidelink control information is a resource of one or more single time units. For example, the resource indicated in the first sidelink control information is a resource of one or more single slots.

In some embodiments, the resource indicated in the first sidelink control information is one or more B2B transmission sets. The B2B transmission set is a resource of a set of consecutive single time units. For example, the B2B transmission set is a resource of a set of consecutive single slots.

In some embodiments, upon exclusion of the first resource from the resource set A by the resource exclusion process, an RSRP threshold is raised by H dB in the case that the number of remaining first resources in the resource set A is less than $Z*M_{total}$, the resource set A is initialized, and the first resource in the resource set A is excluded by performing the resource exclusion process again; the resource set A is determined as the first resource set in the case that the number of remaining first resources in the resource set A is greater than or equal to $Z*M_{total}$. $M_{total}$ is the total number of first resources in the initialized resource set A, and Z and H are set values. Z and H are configured on the network, preconfigured, determined based on practice of the terminal device, or a value predefined in the standard.

In some embodiments, for the reevaluation mechanism, the terminal device reselects the target resource in the case that the target resource is not within the first resource set. For example, the terminal device reselects the target resource from the first resource set. That is, the terminal device selects the first resource in the first resource set to replace the target resource.

From a perspective of inner of the terminal device, the higher layer of the terminal device configures one or more target resources for the physical layer, and the target resources correspond to N consecutive time units in the time domain and correspond to U consecutive sub-channels or IRBs in the frequency domain. The physical layer initializes the resource set A for resource exclusion to acquire the first resource set. For the target resource not within the first resource set, the physical layer reports the reevaluation of the target resource and the first resource set to the higher layer, and the higher layer reselects the reported target resource from the first resource set.

In some embodiments, for the preemption mechanism, the terminal device reselects the target resource in the case that the target resource meets the following conditions 1 to 3.

Condition 1, the target resource is not within the first resource set.

Condition 2, the resource corresponding to the target resource is overlapped with the resource determined based on the first sidelink control information and meets the RSRP threshold condition.

That is, the target resource meets a condition of exclusion based on the sensed first sidelink control information. In some embodiments, the resource corresponding to the target resource is the target resource; or, the resource corresponding to the target resource only includes the target resource. In some embodiments, the resource corresponding to the target resource is a periodic resource including the target resource and having a resource reservation period of the terminal device as a time interval. In some embodiments, the resource determined based on the first sidelink control information is the resource indicated in the first sidelink control information. In some embodiments, corresponding Q2 time units are determined based on the first time units of the sensed first sidelink control information, and the resource determined based on the first sidelink control information includes the resource indicated in the sensed first sidelink control information and the resource indicated in the first sidelink control information assumed to be received within the Q2 time units. In some embodiments, the RSRP threshold condition is met in the case that the RSRP of the PSCCH corresponding to the sensed first sidelink control information or the RSRP of the PSSCH scheduled by the PSCCH is greater than the RSRP threshold.

Condition 3, the priority indicated in the first sidelink control information is higher than the priority of data transmission and/or higher than the priority threshold.

In some embodiments, the priority threshold is configured on the network, preconfigured, or determined based on practice of the terminal device.

From a perspective of inner of the terminal device, the higher layer of the terminal device configures one or more target resources for the physical layer, and the target resources correspond to N consecutive slots in the time domain and correspond to U consecutive sub-channels or IRBs in the frequency domain. The physical layer initializes the resource set A for resource exclusion to acquire the first resource set. For the target resource meeting three conditions (that is, conditions 1 to 3), the physical layer reports the preemption of the target resource and the first resource set to the higher layer, and the higher layer reselects the reported target resource from the first resource set.

In the technical solutions according to the embodiments, in the resource reevaluation and the resource preemption check mechanism, the terminal device determines whether the selected consecutive resources in the time domain conflict with resources indicated by another terminal device or are occupied, and performs the resource reselection on the selected resources to support the B2B transmission, such that the utilization rate of COT is improved, and SL-U users are facilitated to contend for channels.

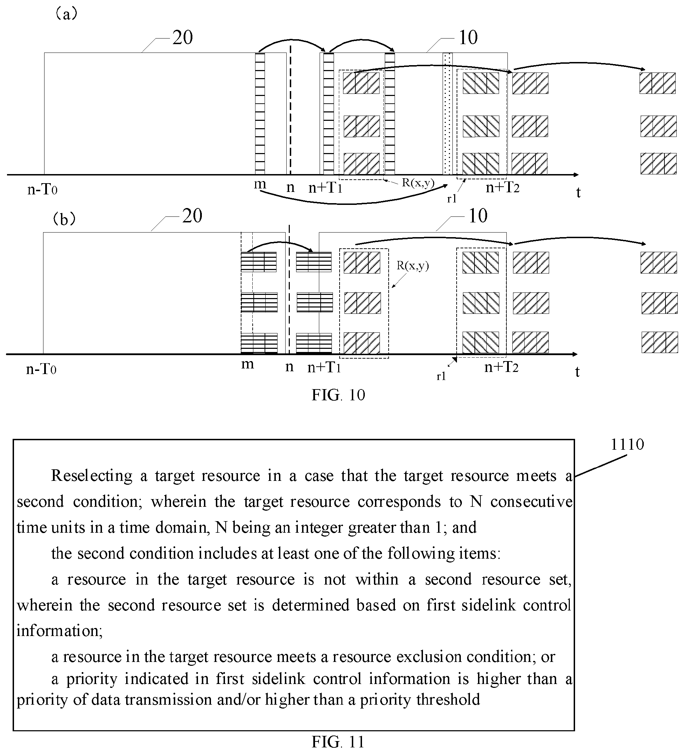

Illustratively, as shown in FIG. 10, the higher layer of the terminal device configures the resource r1 for the physical layer for reevaluation or preemption check. The resource r1 corresponds to one sub-channel, and one sub-channel corresponds to one IRB. One IRB includes three PRBs in the embodiments. The resource r1 corresponds to three slots in the time domain.

For example, as shown in FIG. 10, the terminal device determines a resource selection window 10 from $n+T_1$ to $n+T_2$ and a resource sensing window 20 from $n-T_0$ to $n-T_{proc,0}$ (not including $n-T_{proc,0}$), and determines any resource corresponding to three slots in the time domain and one sub-channel in the frequency domain within the resource selection window 10 as the resource $R(x,y)$. x represents a frequency domain start position of the resource $R(x,y)$, and y represents a time domain start position of the resource $R(x,y)$. The resource $R(x,y)$ shown in FIG. 10 corresponds to one sub-channel in the frequency domain, one sub-channel corresponds to one IRB, and one IRB includes three PRBs in the embodiments.

All resources $R(x,y)$ within the resource selection window 10 are initialized as the resource set A, and the number of resources $R(x,y)$ in the initialized resource set A is denoted as $M_{total}$. The exclusion is performed on the resource set A based on the non-sensing slot and/or the sensed sidelink control information.

The exclusion is performed on the resource set A based on the non-sensing slot. As shown in FIG. 10(a), the terminal device does not sense in the slot m, and performs resource exclusion based on each resource reservation period in the resource reservation period set M configured in the resource pool used by the terminal device. For the resource reservation period 1, assuming that Q is calculated to be 2, then the corresponding Q slots are two next slots mapped from the slot m in FIG. 10(a) as indicated by a horizontal line shadow, having the resource reservation period 1 as an interval. For a resource reservation period 2, assuming that the Q value is calculated to be 1, then the corresponding Q slots are one next slot mapped from the slot m in FIG. 10(a) as indicated by a dotted shadow, having the resource reservation period 2 as an interval. In the case that the corresponding Q slots determined based on the non-sensing slot by the terminal device are overlapped with the resource $R(x,y)$ or the resource corresponding to the resource $R(x,y)$, the resource $R(x,y)$ is excluded from the resource set A.

The exclusion is performed on the resource set A based on the sensed sidelink control information. As shown in FIG. 10(b), the terminal device senses the sidelink control information in the slot m. The sidelink control information indicates the resource indicated by a horizontal line shadow or two B2B sets. In the case that the resource indicated in the sidelink control information is overlapped with the resource $R(x,y)$ or the resource corresponding to the resource $R(x,y)$, and the RSRP of the PSCCH corresponding to the sidelink control information or the RSRP of the PSSCH scheduled by the PSCCH is greater than the RSRP threshold, the resource $R(x,y)$ is excluded from the resource set A.

The resource corresponding to the resource $R(x,y)$ is a periodic resource with the same frequency domain position as the resource $R(x,y)$ and having a fixed time interval from the resource $R(x,y)$ in a time domain position. The fixed time interval is determined based on the resource reservation period of the terminal device, and the resource corresponding to the resource $R(x,y)$ includes the resource $R(x,y)$. For example, in FIG. 10, the resource corresponding to the resource $R(x,y)$ is three transmission resources corresponding to the resource $R(x,y)$.

In the case that the number of resources $R(x,y)$ in the resource set A upon the resource exclusion is less than $Z*M_{total}$, the resource set A is initialized, the RSRP threshold is raised by 3 dB, and the resource exclusion based on the non-sensing slot and/or the sensed sidelink control information is performed again until the number of remaining resources $R(x,y)$ in the resource set A upon the resource exclusion is greater than or equal to $Z*M_{total}$. The resource set A upon the resource exclusion is denoted as the first resource set.

In the case that r1 is a resource configured by the higher layer for reevaluation, the physical layer reports r1 to the high layer in the case that r1 is not within the first resource set, which indicates that r1 needs to be reselected upon reevaluation. The higher layer selects a resource from the first resource set to replace the resource r1.

In the case that r1 is a resource configured by the higher layer for preemption, the physical layer reports to the high layer that r1 is preempted in the case that r1 meets three conditions. The three conditions include that the resource r1 is not within a first resource set; the resource r1 is excluded in the exclusion process based on the sensed sidelink control information, that is, a resource corresponding to the resource r1 is overlapped with the resource determined based on the sensed sidelink control information and meets the RSRP threshold condition; and a priority of the sensed sidelink control information is higher than a priority of data transmission of the terminal device.

In the embodiments, the terminal device configured one or more B2B transmission sets for the physical layer for reevaluation or preemption check. The physical layer initializes the resource set A as a set of resources R(x,y), and the resources R(x,y) correspond to a plurality of consecutive time units in the time domain. As the determined B2B transmission set is a resource composed of a plurality of time units, and the resource R(x,y) is also a resource composed of a plurality of time units, determination conditions of reevaluation and preemption check do not need to be modified, and the determination conditions specified in the existing NR V2X standard are still used.

Referring to FIG. 11, a flowchart of a method for resource reselection according to some embodiments of the present disclosure is illustrated. The method is applicable to the network architecture shown in FIG. 1, such as a terminal device. The method includes following processes.

In S1110, a target resource is reselected in a case that the target resource meets a second condition, wherein the target resource corresponds to N consecutive time units in a time domain, N being an integer greater than 1.

The second condition includes at least one of the following items:

a resource in the target resource is not within a second resource set, wherein the second resource set is determined based on first sidelink control information;
a resource in the target resource meets a resource exclusion condition; or
a priority indicated in first sidelink control information is higher than a priority of data transmission and/or higher than a priority threshold.

In the embodiments of the present disclosure, the target resource corresponds to two or more consecutive time units in the time domain. The "time unit" in the embodiments of the present disclosure may be a slot, a subframe, or any other time unit, which is not limited in the present disclosure. For the "time unit" mentioned elsewhere herein, reference is made to this explanation, which is not repeated herein. Illustratively, the target resource corresponds to N consecutive slots in the time domain, and N is an integer greater than 1.

In some embodiments, the target resource corresponding to the N consecutive time units in the time domain means that the target resource corresponds to N consecutive physical time units in the time domain. Using the time unit being the slot as an example, the target resource corresponds to N consecutive physical slots in the time domain.

In some embodiments, the target resource corresponding to the N consecutive time units in the time domain means that the target resource corresponds to N consecutive time units belonging to the resource pool in the time domain. The time unit belonging to the resource pool is also referred to as the logical time unit. That is, the target resource corresponds to N consecutive logical time units in the time domain. Using the time unit being the slot as an example, the target resource corresponds to N consecutive slots belonging to the resource pool in the time domain, or, the target resource corresponds to N consecutive logical slots in the time domain.

It should be noted that in the case that the time units in the resource pool are consecutive physical time units in the time domain, N consecutive time units belonging to the resource pool corresponding to the target resource in the time domain are N consecutive physical time units; and in the case that the time units in the resource pool are dis consecutive physical time units in the time domain, N consecutive time units belonging to the resource pool corresponding to the target resource in the time domain may be N nonconsecutive physical time units. In addition, N is configured on the network, preconfigured, configured by the higher layer of the terminal device for the physical layer, determined based on practice of the terminal device, or a value predefined in the standard.

In some embodiments, the target resource corresponds to U consecutive sub-channels or IRBs in the frequency domain, and U is a positive integer. In some embodiments, the target resource includes a resource of a plurality of consecutive single time units. For example, the target resource includes a resource of a plurality of consecutive single slots.

In some embodiments, the target resource is a selected resource of the terminal device. For example, for the reevaluation mechanism, the target resource is a resource selected by the terminal but not indicated by transmission of second sidelink control information. For example, for the preemption mechanism, the target resource is a resource selected by the terminal and indicated by transmission of second sidelink control information. The second sidelink control information is sidelink control information transmitted by the terminal device to another terminal device, and the first sidelink control information is sidelink control information received by the terminal device from another terminal device. It should be noted that the first sidelink control information and the second sidelink control information are sidelink control information for resource indication and reservation (that is, the 1st-stage-SCI described above), have the same function, include the same information domain, and have the same format.

In some embodiments, the second resource set is a resource set acquired by performing resource exclusion based on the sensed first sidelink control information by the terminal device. In some embodiments, the terminal device performs the resource exclusion in following processes.

1. Determining a resource selection window and a resource sensing window.

In some embodiments, the resource selection window is $[n+T_1, n+T_2]$, and the resource sensing window is $[n-T_0, n-T_{proc,0})$. n is a time unit where the higher layer of the terminal device triggers the physical layer to report a candidate resource set, a time unit where the reevaluation is triggered, or a time unit where the resource preemption check is triggered, $T_1$, $T_2$, $T_0$, and $T_{proc,0}$ are set values, and reference may be made to above description for details.

2. Determining an initialized resource set, wherein the initialized resource set includes at least one second resource within the resource selection window, wherein the at least one second resource is a resource of a single time unit.

Illustratively, the above resource set is denoted as the resource set A, and the resource set A includes all available resources within the resource selection window. Illustratively, the available resource is a resource of the single time unit, such as a resource of a single slot. Illustratively, the available resource is a resource in the resource pool. In some embodiments, all second resources within the resource selection window are initialized as the resource set A. That is, any resource in the resource set A is denoted as the second resource., and the second resource is the resource of the single time unit. Illustratively, the second resource is a resource R(x,y). x represents a frequency domain position of the second resource, and y represents a time domain position of the second resource. In some embodiments, x represents a frequency domain start position of the second resource.

In some embodiments, the second resource corresponds to U consecutive sub-channels or IRBs in the frequency domain. Each of the U consecutive sub-channels includes one or more consecutive IRBs, and U is a positive integer. In the case that U is equal to 1, the second resource corresponds to one sub-channel or IRB in the frequency domain. In the case that U is greater than or equal to 2, the second resource corresponds to U consecutive sub-channels or IRBs in the frequency domain. Illustratively, the U consecutive sub-channels or IRBs are in the same resource block set. In some embodiments, U is configured on the network, preconfigured, configured by the higher layer of the terminal device for the physical layer, determined based on practice of the terminal device, or a value predefined in the standard. Illustratively, the resource R(x,y) represents U consecutive sub-channels or IRBs in the slot y from the sub-channel or IRB x.

3. Acquiring a second resource set by excluding the at least one second resource from the initialized resource set by a resource exclusion process, wherein the resource exclusion process includes at least one of a first exclusion processor a second exclusion process, wherein the first exclusion process is configured to perform resource exclusion based on a non-sensing time unit within the resource sensing window, and the second exclusion process is configured to perform resource exclusion based on first sidelink control information sensed within the resource sensing window.

In some embodiments, the first exclusion process includes: determining Q1 time units corresponding to the non-sensing time unit based on the non-sensing time unit and each resource reservation period in the resource reservation period set configured in the resource pool or in the sub-sets of the resource reservation period set, wherein Q1 is a positive integer; and excluding the second resource from the resource set in the case that the Q1 time units are overlapped with the second resource in the resource set or overlapped with the resource corresponding to the second resource. Illustratively, the resource reservation period set or the subsets of the resource reservation period set is configured on the network, preconfigured, or determined based on practice of the terminal device. Illustratively, the resource corresponding to the second resource is a periodic resource with the same frequency domain position as the second resource and having a fixed time interval from the second resource in the time domain position. In some embodiments, the resource corresponding to the second resource includes the second resource. In some embodiments, the fixed time interval is determined based on the resource reservation period of the terminal device. In some embodiments, the terminal device does not perform the first exclusion process, that is, the terminal device does not perform the process of the resource exclusion on the resource set A based on the non-sensing time unit within the resource sensing window.

In some embodiments, the second exclusion process includes excluding the second resource from the resource set in the case that a resource indicated in the first sidelink control information is overlapped with the second resource in the resource set or overlapped with the resource corresponding to the second resource and meets the RSRP threshold condition.

In some embodiments, the second exclusion process includes determining Q2 time units corresponding to the first time unit based on the first time unit in which the first sidelink control information is sensed and the resource reservation period indicated in the first sidelink control information, and assuming that the first sidelink control information with same content is to be received within the Q2 time units, wherein Q2 is a positive integer; and excluding the second resource from the resource set in the case that the resource indicated in the first sidelink control information that is sensed and assumed to be received is overlapped with the second resource in the resource set or overlapped with the resource corresponding to the second resource and meets the RSRP threshold condition.

In some embodiments, the RSRP threshold condition includes that the RSRP of the PSCCH corresponding to the first sidelink control information or the RSRP of the PSSCH scheduled by the PSCCH is greater than the RSRP threshold.

In some embodiments, the resource indicated in the first sidelink control information is a resource determined based on at least one of:

a first indication field, indicating a time domain position of the resource;
a second indication field, indicating a frequency domain position of the resource;
a third indication field, indicating whether the resource is transmitted by B2B transmission; or
a fourth indication field, indicating a transmission round of B2B transmission. The transmission round can be considered as a position of the resource in the B2B transmission, the number of transmissions of the resource in the B2B transmission, and the like. Illustratively, the fourth indication field indicates the position of the resource corresponding to the first sidelink control information or the resource for transmitting the first sidelink control information in the B2B transmission or the number of transmissions the resources corresponding to the first sidelink control information or the resource for transmitting the first sidelink control information in the B2B transmission.

In some embodiments, the resource indicated in the first sidelink control information is the resource of one or more single time units. For example, the resource indicated in the first sidelink control information is the resource of one or more single slots.

In some embodiments, the resource indicated in the first sidelink control information is one or more B2B transmission sets. The B2B transmission set is a resource of a set of consecutive single time units. For example, the B2B transmission set is a resource of a set of consecutive single slots.

In some embodiments, upon exclusion of the second resource from the resource set by the resource exclusion process, the RSRP threshold is raised by H dB in the case that the resource set meets a third condition and/or a fourth condition, the resource set is initialized, and the second resource is excluded from the resource set by performing the resource exclusion process again; or, the resource set is determined as the second resource set in the case that the resource set does not meet the third condition and/or the fourth condition. The third condition includes that the number of remaining second resources in the resource set is less than $X*M_{total}$, and the fourth condition includes that the number of second resources meeting a fifth condition in the resource set is less than a fifth threshold. The fifth condition includes that at least M consecutive time units starting from the time unit of the second resource include a non-excluded second resource, $M_{total}$ is a total number of second resources in the initialized resource set, and M is a positive integer. Illustratively, M is an integer greater than 1.

In some embodiments, upon exclusion of the second resource from the resource set by the resource exclusion process, the RSRP threshold is raised by H dB in the case that the resource set meets the third condition, the resource set is initialized, and the second resource is excluded from the resource set by performing the resource exclusion process again; or, the resource set is determined as the second resource set in the case that the resource set does not meet the third condition. The third condition is described above.

In some embodiments, upon exclusion of the second resource from the resource set by the resource exclusion process, the RSRP threshold is raised by H dB in the case that the resource set meets the fourth condition, the resource set is initialized, and the second resource is excluded from the resource set by performing the resource exclusion process again; or, the resource set is determined as the second resource set in the case that the resource set does not meet the fourth condition. The fourth condition is described above.

In some embodiments, upon exclusion of the second resource from the resource set by the resource exclusion process, the RSRP threshold is raised by H dB in the case that the resource set meets at least one of the third condition or the fourth condition, the resource set is initialized, and the second resource is excluded from the resource set by performing the resource exclusion process again; or, the resource set is determined as the second resource set in the case that the resource set does not meet the third condition and the fourth condition. The third condition and the fourth condition are described above. In the embodiments, the initiation is performed and the resource exclusion process is performed again in the case that the resource set meets at least one of the third condition or the fourth condition, such that the acquired second resource set includes sufficient resources and a sufficient number of consecutive resources.

In some embodiments, M is configured on the network, preconfigured, configured by the higher layer of the terminal device for the physical layer, determined based on practice of the terminal device, or a value predefined in the standard. Illustratively, at least M time units are at least M consecutive physical time units or at least M consecutive time units belonging to the resource pool. Illustratively, at least M time units are M consecutive physical time units or M consecutive time units belonging to the resource pool.

In some embodiments, second resources within the at least M consecutive time units are in a resource block set. Illustratively, using the time unit being the slot as an example, the fifth condition is that at least M consecutive slots within the same resource block set from a slot of the resource R(x,y) include non-excluded or remaining resources R(x,y). In some embodiments, frequency domain positions of the second resources within the at least M consecutive slots are the same or different. Illustratively, frequency domain positions of resources R(x,y) within the at least M consecutive slots are the same. Illustratively, frequency domain positions of resources R(x,y) within the at least M consecutive slots are different.

In some embodiments, the fifth condition includes that N consecutive time units from the time unit of the second resource include a non-excluded second resource. N is greater than or equal to M.

In some embodiments, the fifth threshold is configured on the network, preconfigured, configured by the higher layer of the terminal device for the physical layer, determined based on practice of the terminal device, or a value predefined in the standard. In some embodiments, the fifth threshold is determined based on at least one of a COT duration, a remaining COT duration, a channel access priority, a priority of data transmission, a CBR, or a remaining delay budget. In some embodiments, the fifth threshold is equal to $Z*M_{total}$. Z is configured on the network, preconfigured, configured by the higher layer of the terminal device for the physical layer, determined based on practice of the terminal device, or a value predefined in the standard.

Upon the resource exclusion process, the resource set A upon the resource exclusion is denoted as the second resource set. The target resource is reselected in the case that the target resource meets the following conditions 1 to 3.

Condition 1, the resource in the target resource is not within the second resource set, and the second resource set is determined based on the first sidelink control information.

In some embodiments, the condition 1 is that the target resource includes a resource of a single time unit not within the second resource set.

In some embodiments, the condition 1 is that the number of resources of single time units not within the second resource set in the target resource is greater than or equal to a first threshold. For example, the first threshold is configured on the network, preconfigured, determined based on practice of the terminal device, or a value predefined in the standard.

In some embodiments, the condition 1 is that the number of resources of consecutive single time units not within the second resource set in the target resource is greater than or equal to a second threshold. For example, the second threshold is configured on the network, preconfigured, determined based on practice of the terminal device, or a value predefined in the standard.

In some embodiments, the condition 1 is that none of resources of single time units in the target resource are within the second resource set.

Condition 2, the resource in the target resource meets the resource exclusion condition.

In some embodiments, the condition 2 is that the target resource includes a resource of a single time unit meeting the resource exclusion condition.

In some embodiments, the condition 2 is that the number of resources of single time units meeting the resource exclusion condition in the target resource is greater than or equal to a third threshold. For example, the third threshold is configured on the network, preconfigured, determined based on practice of the terminal device, or a value predefined in the standard.

In some embodiments, the condition 2 is that the number of resources of consecutive single time units meeting the resource exclusion condition in the target resource is greater than or equal to a fourth threshold. For example, the fourth threshold is configured on the network, preconfigured, determined based on practice of the terminal device, or a value predefined in the standard.

In some embodiments, the condition 2 is that resources of single time units in the target resource all meet the resource exclusion condition.

In some embodiments, the resource exclusion condition includes the resource corresponding to the resource of the single time unit being overlapped with the resource determined based on the first sidelink control information and meeting the RSRP threshold condition. In some embodiments, the RSRP threshold condition is that the RSRP of the PSCCH corresponding to the sensed first sidelink control information or the RSRP of the PSSCH scheduled by the PSCCH is greater than the RSRP threshold.

In some embodiments, the resource corresponding to the resource of the single time unit is the resource of the single time unit. Or, the resource corresponding to the resource of the single time unit only includes the resource of the single time unit.

In some embodiments, the resource corresponding to the resource of the single time unit is a periodic resource including the resource of the single time unit and having the resource reservation period of the terminal device as a time interval.

In some embodiments, the resource determined based on the first sidelink control information is the resource indicated in the sensed first sidelink control information.

In some embodiments, the resource determined based on the first sidelink control information is the resource indicated in the first sidelink control information that is sensed and assumed to be received. For example, the corresponding Q2 time units are determined based on the first time unit of the sensed first sidelink control information, and the resource determined based on the first sidelink control information includes the resource indicated in the sensed first sidelink control information and the resource indicated in the first sidelink control information assumed to be received within the Q2 time units.

Condition 3, the priority indicated in the first sidelink control information is higher than the priority of data transmission and/or higher than the priority threshold.

In some embodiments, the priority threshold is configured on the network, preconfigured, or determined based on practice of the terminal device.

In some embodiments, for the reevaluation mechanism, the terminal device reselects the target resource in the case that the resource in the target resource is not within the second resource set. For example, the terminal device selects the second resource in the second resource set to replace the target resource. In some embodiments, consecutive second resources in the time domain are prioritized selecting from the second resource set to replace the target resource. In some embodiments, resources of N consecutive single time units in the time domain are selected from the second resource set to replace the target resource.

From a perspective of inner of the terminal device, the higher layer of the terminal device configures one or more target resources for the physical layer, and the target resources correspond to N consecutive time units in the time domain and correspond to U consecutive sub-channels or IRBs in the frequency domain. In some embodiments, numbers N of time units corresponding to various target resources are the same or different. For a target resource, corresponding U consecutive sub-channels or IRBs within various time units are the same or different. The physical layer initializes the resource set A for resource exclusion to acquire the second resource set. For a target resource meeting condition 1, the physical layer reports reevaluation of the target resource and the second resource set to the higher layer, and the higher layer reselects the reported target resource from the second resource set. As in the embodiments, numbers N of time units corresponding to the target resources configured by the higher layer may be different, for example, the target resource 1 corresponding to three slots and the target resource 2 corresponding to four slots, resource of three consecutive single slots in the time domain are selected to replace the target resource 1 and resource of four consecutive single slots in the time domain are selected to replace the target resource 2 in the case that the resource reselection is performed based on the second resource set.

In some embodiments, for the preemption mechanism, the terminal device reselects the target resource in the case that the target resource meets conditions 1 to 3. For example, the terminal device selects the second resource in the second resource set to replace the target resource. In some embodiments, consecutive second resources in the time domain are prioritized selecting from the second resource set to replace the target resource. In some embodiments, resources of N consecutive single time units in the time domain are selected from the second resource set to replace the target resource.

From a perspective of inner of the terminal device, the higher layer of the terminal device configures one or more target resources for the physical layer, and the target resources correspond to N consecutive time units in the time domain and correspond to U consecutive sub-channels or IRBs in the frequency domain. In some embodiments, numbers N of time units corresponding to various target resources are the same or different. For a target resource, corresponding U consecutive sub-channels or IRBs within various slots are the same or different. The physical layer initializes the resource set A for resource exclusion to acquire the second resource set. For a target resource meeting conditions 1 to 3, the physical layer reports preemption of the target resource and the second resource set to the higher layer, and the higher layer reselects the reported target resource from the second resource set. As in the embodiments, the numbers N of time units corresponding to the target resources configured by the higher layer may be different, for example, the target resource 1 corresponding to three slots and the target resource 2 corresponding to four slots, resource of three consecutive single slots in the time domain are selected to replace the target resource 1 and resource of four consecutive single slots in the time domain are selected to replace the target resource 2 in the case that the resource reselection is performed based on the second resource set.

In the technical solutions according to the embodiments, in the resource reevaluation and the resource preemption check mechanism, the terminal device determines whether the selected consecutive resources in the time domain conflict with resources indicated in another terminal device or are occupied, and performs the resource reselection on the selected resources to support the B2B transmission, such that the utilization rate of COT is improved, and SL-U users are facilitated to contend for channels.

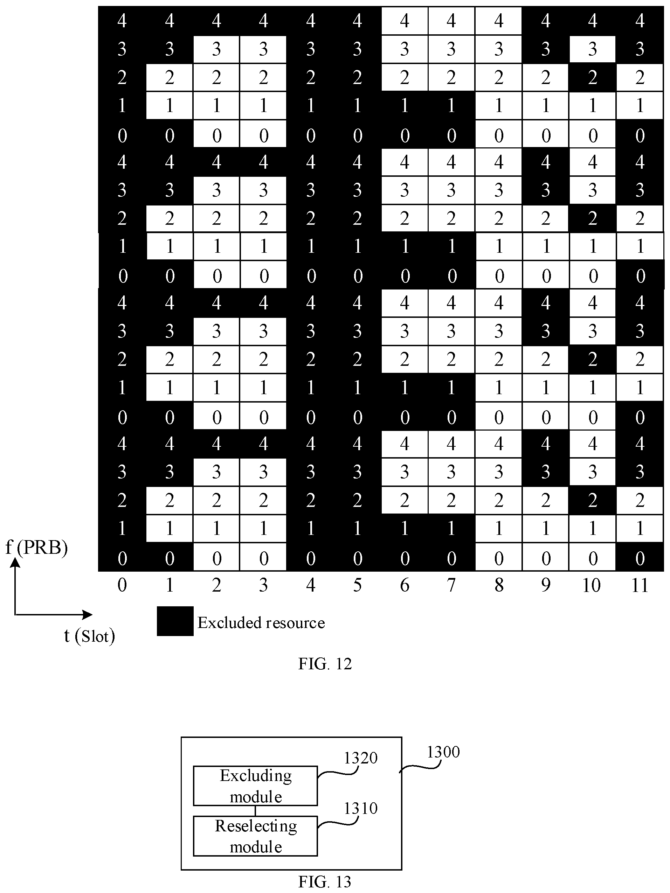

Illustratively, as shown in FIG. 12, one sub-channel in FIG. 12 corresponds to one IRB (that is, each of 0, 1, 2, 3, and 4 in the frequency domain in the drawing represents one IRB). Assuming that resources $R(x,y)$ are resources corresponding to two consecutive sub-channels (that is, U is equal to 2) from the sub-channel x in the frequency domain within the slot y, for example, $R(0, 0)$ represents resources corresponding to the sub-channels 0 and 1 within the slot 0, and $R(0, 1)$ represents resources corresponding to the sub-channels 0 and 1 within the slot 1, then the resource set A is initialized as all resources $R(x,y)$ within the slots 0 to 11, and the number of resources $R(x,y)$ in the initialized resource set A is $M_{total}$. The resource exclusion based on the non-sensing slot and/or the sensed sidelink control information is performed on the resource set A, and remaining resources upon exclusion are shown in FIG. 12, which including R(1,1), R(0,2), R(1,2), R(2,2)...R(2,6), R(3,6), R(2,7), ... , R(1,11).

It is assumed that M configured by the higher layer for the physical layer is 2, the higher layer configures the parameter Z for the physical layer, and the fifth threshold is $Z*M_{total}$.

In the case that the resource set A upon the resource exclusion meets at least one of the following third condition and fourth condition, the RSRP threshold is raised by 3 dB, the resource set A is initialized, and the resource exclusion is performed on the resource set A again.

The third condition is that the number of remaining resources R(x,y) in the resource set A is less than $X*M_{total}$.

The fourth condition is that the number of remaining resources R(x,y) meeting the fifth condition in the resource set A is less than $Z*M_{total}$.

Assuming that the fifth condition is that M consecutive slots starting from a slot of the resource R(x,y) all include a non-excluded or remaining resource R(x,y), and frequency positions of remaining resources R(x,y) in the M slots are the same, then the remaining resources R(x,y) meeting the condition in FIG. 12 include R(1,1), R(0,2), R(1,2), R(2,2), R(2,6), R(3,6), R(2,7), R(3,7), R(0,8), R(1,8), R(0,9).

Assuming that the fifth condition is that at least M consecutive slots starting from a slot of the resource R(x,y) all include a non-excluded or remaining resource R(x,y), and frequency positions of remaining resources R(x,y) in the at least M slots are the same or different, then the remaining resources R(x,y) meeting the condition in FIG. 12 include R(1,1), R(0,2), R(1,2), R(2,2), R(2,6), R(3,6), R(2,7), R(3,7), R(0,8), R(1,8), R(2,8), R(3,8), R(0,9), R(1,9), R(0,10), R(3,10), R(1,11).

Assuming that the number of remaining resources R(x,y) in the resource set A upon the resource exclusion is greater than $X*M_{total}$, and the number of remaining resources R(x,y) meeting the fifth condition is greater than $Z*M_{total}$, then the resource exclusion process does not need to be performed again. The resource set A upon the resource exclusion is denoted as the second resource set, and the second resource set includes R(1,1), R(0,2), R(1,2), R(2,2)...R(2,6), R(3,6), R(2,7), ..., R(1,11).

It is assumed that the higher layer configures the target resource r1 for the lower layer for reevaluation or preemption check. r1 corresponds to tow slots (N is equal to 2) in the time domain and corresponds to two consecutive sub-channels (U is equal to 2) in the frequency domain, that is, r1 corresponds to different sub-channels in two slots. Specifically, r1 corresponds to the resources R(1,3) and R(2,4) in FIG. 12.

In the case that r1 is a resource configured by the higher layer for reevaluation, as the resource R(2,4) is not in the second resource set, the physical layer reports r1 to the higher layer to indicate that r1 needs to be reselected upon reevaluation, and the physical layer reports the second resource set to the higher layer. The higher layer selects a resource from the second resource set to replace the resource r1. For example, the higher layer selects consecutive R(2,6) and R(3,7) in the time domain from the second resource set to replace the resource r1.

In the case that r1 is a resource configured by the higher layer for resource preemption, as the resource R(2,4) is not in the second resource set, is overlapped with the resource determined based on the sensed first sidelink control information, and meets the RSRP threshold condition, and the priority indicated in the first sidelink control information is higher than the priority of data transmission of the terminal, the physical layer reports to the higher layer that r1 is preempted. The higher layer selects a resource from the second resource set to replace the resource r1. For example, the higher layer selects consecutive R(2,6) and R(3,7) in the time domain from the second resource set to replace the resource r1.

In the embodiments, the higher layer configures one or more B2B transmission sets for the physical layer for reevaluation or preemption check, the resource R(x,y) in the physical layer is a resource of the single time unit, and the resource set A upon the resource exclusion includes the resource of the single time unit. Thus, the determine how many resources in the B2B transmission set are preempted or conflict with another terminal. In the case that the target resource is preempted, resources of a plurality of consecutive single slots are selected in the reselection to form a new B2B transmission set.

The following is an apparatus embodiment of the present disclosure that may be configured to implement the method embodiments of the present disclosure. For details that are not disclosed in the apparatus embodiment of the present disclosure, reference may be made to the method embodiments of the present disclosure.

Referring to FIG. 13, a block diagram of an apparatus for resource reselection according to some embodiments of the present disclosure is illustrated. The apparatus has the function of implementing the above embodiments of the method for resource reselection, and the function may be achieved by hardware or by hardware executing corresponding software. The apparatus may be the terminal device mentioned above or may be provided in the terminal device. As shown in FIG. 13, the apparatus 1300 includes: a reselection module 1310.

In some exemplary embodiments, the reselection module 1310 is configured to reselect a target resource in a case that the target resource meets a first condition; wherein the target resource corresponds to N consecutive time units in a time domain, N being an integer greater than 1; and

the first condition includes at least one of the following items:

the target resource is not within a first resource set, wherein the first resource set is determined based on first sidelink control information;

a resource corresponding to the target resource is overlapped with a resource determined based on first sidelink control information and meets an RSRP threshold condition; or

a priority indicated in first sidelink control information is higher than a priority of data transmission and/or higher than a priority threshold.

In some embodiments, the target resource is a resource selected by a terminal device but not indicated by transmission of second sidelink control information.

In some embodiments, the target resource is a resource selected by a terminal device and indicated by transmission of second sidelink control information.

In some embodiments, as shown in FIG. 13, the apparatus further includes an excluding module 1320, configured to:

determine a resource selection window and a resource sensing window;

determine an initialized resource set, wherein the initialized resource set includes at least one first resource within the resource selection window, wherein the at least one first resource corresponds to N consecutive time units in the time domain; and

acquire a first resource set by excluding the at least one first resource from the initialized resource set by a resource exclusion process, wherein the resource exclusion process includes at least one of a first exclusion process or a second exclusion process, wherein the first exclusion process is configured to perform resource exclusion based on a non-sensing time unit within the resource sensing window, and the second exclusion process is configured to perform resource exclusion based on first sidelink control information sensed within the resource sensing window.

In some embodiments, the at least one first resource corresponding to the N consecutive time units in the time domain includes at least one of the following cases:

the at least one first resource corresponds to N consecutive physical time units in the time domain; or

the at least one first resource corresponds to N consecutive time units belonging to a resource pool in the time domain.

In some embodiments, the at least one first resource corresponds to U consecutive sub-channels or IRBs in a frequency domain, wherein each of the U consecutive sub-channels includes one or more consecutive IRBs, and U is a positive integer.

In some embodiments, the U consecutive sub-channels or IRBs are within the same resource block set.

In some embodiments, the first exclusion process includes:

determining Q1 time units corresponding to the non-sensing time unit based on the non-sensing time unit and each resource reservation period in a resource reservation period set configured in a resource pool or in sub-sets of a resource reservation period set, wherein Q1 is a positive integer; and

excluding the at least one first resource from the initialized resource set in a case that the Q1 time units are overlapped with the at least one first resource in the initialized resource set or overlapped with a resource corresponding to the at least one first resource.

In some embodiments, the second exclusion process includes:

excluding the at least one first resource from the initialized resource set in a case that a resource indicated in the first sidelink control information is overlapped with the at least one first resource in the initialized resource set or overlapped with a resource corresponding to the at least one first resource and meets the RSRP threshold condition; or

determining Q2 time units corresponding to a first time unit based on the first time unit in which the first sidelink control information is sensed and a resource reservation period indicated in the first sidelink control information, and assuming that the first sidelink control information with same content is to be received within the Q2 time units, wherein Q2 is a positive integer; and excluding the at least one first resource from the initialized resource set in a case that a resource indicated in the first sidelink control information that is sensed and assumed to be received is overlapped with the at least one first resource in the initialized resource set or overlapped with a resource corresponding to the at least one first resource and meets the RSRP threshold condition.

In some embodiments, the resource indicated in the first sidelink control information is a resource determined based on at least one of:

a first indication field, indicating a time domain position of the resource;
a second indication field, indicating a frequency domain position of the resource;
a third indication field, indicating whether the resource is transmitted by B2B transmission; or
a fourth indication field, indicating a transmission round of B2B transmission.

In some embodiments, the resource indicated in the first sidelink control information is a resource of one or more single time units or one or more B2B transmission sets.

In some embodiments, the resource corresponding to the at least one first resource is a periodic resource with the same frequency domain position as the at least one first resource and having a fixed time interval from the at least one first resource in a time domain position.

In some embodiments, the resource corresponding to the target resource is the target resource, or a periodic resource including the target resource and having a resource reservation period of a terminal device as a time interval.

In some embodiments, the reselecting module is further configured to select a remaining first resource from a first resource set to replace the target resource.

In some embodiments, N is determined based on at least one of a COT duration, a remaining COT duration, a channel access priority, a priority of data transmission, a CBR, or a remaining delay budget.

In some exemplary embodiments, the reselection module 1310 is configured to reselect a target resource in a case that the target resource meets a second condition; wherein the target resource corresponds to N consecutive time units in a time domain, N being an integer greater than 1; and

the second condition includes at least one of the following items:

a resource in the target resource is not within a second resource set, wherein the second resource set is determined based on first sidelink control information;
a resource in the target resource meets a resource exclusion condition; or
a priority indicated in first sidelink control information is higher than a priority of data transmission and/or higher than a priority threshold.

In some embodiments, the target resource is a resource selected by a terminal device but not indicated by transmission of second sidelink control information.

In some embodiments, the target resource is a resource selected by a terminal device and indicated by transmission of second sidelink control information.

In some embodiments, a resource in the target resource being not within a second resource set includes at least one of the following cases:

the target resource includes a resource of a single time unit not within the second resource set;
the number of resources of single time units not within the second resource set in the target resource is greater than or equal to a first threshold;
the number of resources of consecutive single time units not within the second resource set in the target resource is greater than or equal to a second threshold; or
none of resources of single time units in the target resource are within the second resource set.

In some embodiments, a resource in the target resource meeting a resource exclusion condition includes:

the target resource includes a resource of a single time unit meeting the resource exclusion condition;
the number of resources of single time units meeting the resource exclusion condition in the target resource is greater than or equal to a third threshold;
the number of resources of consecutive single time units meeting the resource exclusion condition in the target resource is greater than or equal to a fourth threshold; or
resources of single time units in the target resource all meet the resource exclusion condition.

In some embodiments, the resource exclusion condition includes a resource corresponding to the resource of the single time unit being overlapped with a resource determined based on first sidelink control information and meeting an RSRP threshold condition.

In some embodiments, the resource corresponding to the resource of the single time unit is the resource of the single time unit, or a periodic resource including the resource of the single time unit and having a resource reservation period of a terminal device as a time interval.

In some embodiments, the resource determined based on the first sidelink control information is a resource indicated in sensed first sidelink control information, or a resource indicated in first sidelink control information that is sensed and assumed to be received.

In some embodiments, as shown in FIG. 13, the apparatus further includes an excluding module, configured to:

determine a resource selection window and a resource sensing window;

determine an initialized resource set, wherein the initialized resource set includes at least one second resource within the resource selection window, wherein the at least one second resource is a resource of a single time unit; and

acquire a second resource set by excluding the at least one second resource from the initialized resource set by a resource exclusion process, wherein the resource exclusion process includes at least one of a first exclusion process or a second exclusion process, wherein the first exclusion process is configured to perform resource exclusion based on a non-sensing time unit within the resource sensing window, and the second exclusion process is configured to perform resource exclusion based on first sidelink control information sensed within the resource sensing window.

In some embodiments, the at least one second resource corresponds to U consecutive sub-channels or IRBs in a frequency domain, wherein each of the U consecutive sub-channels includes one or more consecutive IRBs, and U is a positive integer.

In some embodiments, the U consecutive sub-channels or IRBs are within the same resource block set.

In some embodiments, the first exclusion process includes:

determining Q1 time units corresponding to the non-sensing time unit based on the non-sensing time unit and each resource reservation period in a resource reservation period set configured in a resource pool or in sub-sets of a resource reservation period set, wherein Q1 is a positive integer; and

excluding the at least one second resource from the initialized resource set in a case that the Q1 time units are overlapped with the at least one second resource in the initialized resource set or overlapped with a resource corresponding to the at least one second resource.

In some embodiments, the second exclusion process includes:

excluding the at least one second resource from the initialized resource set in a case that a resource indicated in the first sidelink control information is overlapped with the at least one second resource in the initialized resource set or overlapped with a resource corresponding to the at least one second resource and meets an RSRP threshold condition; or

determining Q2 time units corresponding to a first time unit based on the first time unit in which the first sidelink control information is sensed and a resource reservation period indicated in the first sidelink control information, and assuming that the first sidelink control information with same content is to be received within the Q2 time units, wherein Q2 is a positive integer; and excluding the at least one second resource from the initialized resource set in a case that a resource indicated in the first sidelink control information that is sensed and assumed to be received is overlapped with the at least one second resource in the initialized resource set or overlapped with a resource corresponding to the at least one second resource and meets an RSRP threshold condition.

In some embodiments, the resource indicated in the first sidelink control information is a resource determined based on at least one of:

a first indication field, indicating a time domain position of the resource;

a second indication field, indicating a frequency domain position of the resource;

a third indication field, indicating whether the resource is transmitted by B2B transmission; or

a fourth indication field, indicating a transmission round of B2B transmission.

In some embodiments, the resource indicated in the first sidelink control information is a transmission resource of one or more single time units or one or more B2B transmission sets.

In some embodiments, the resource corresponding to the at least one second resource is a periodic resource with the same frequency domain position as the at least one second resource and having a fixed time interval from the at least one second resource in a time domain position.

In some embodiments, the excluding module is further configured to:

upon excluding the at least one second resource from the initialized resource set by the resource exclusion process, raise an RSRP threshold by H dB in a case that the initialized resource set meets at least one of a third conditioner a fourth condition, initiate the initialized resource set, and exclude the at least one second resource from the initialized resource set by performing the resource exclusion process again; or determine the initialized resource set as the second resource set in a case that the initialized resource set does not meet at least one of a third condition or a fourth condition; wherein

the third condition includes that the number of remaining second resources in the initialized resource set is less than $X*M_{total}$, and the fourth condition includes that the number of second resources meeting a fifth condition in the initialized resource set is less than a fifth threshold, wherein the fifth condition includes that at least M consecutive time units starting from a time unit of the at least one second resource include a non-excluded second resource, $M_{total}$ is a total number of second resources in the initialized resource set, and M is a positive integer.

In some embodiments, the N consecutive time units are N consecutive physical time units or N consecutive time units belonging to a resource pool.

In some embodiments, the reselecting module 1310 is further configured to select a remaining second resource from the second resource set to replace the target resource.

In some embodiments, the reselecting module 1310 is further configured to prioritize selecting consecutive second resources in the time domain from the second resource set to replace the target resource.

It should be noted that, in the case that the apparatus according to the above embodiments implements the functions thereof, the division of the functional modules is merely exemplary. In practice, the above functions may be assigned to and completed by different functional modules according to actual needs, that is, the internal structure of the apparatus may be divided into different functional modules, to implement all or a part of the above functions.

With regard to the apparatus in the above embodiments, the specific manner in which each module performs the operation has been described in detail in the embodiments related to the method and will not be described in detail herein. Reference may be made to the above method embodiments for details that are not specified in the apparatus embodiment.

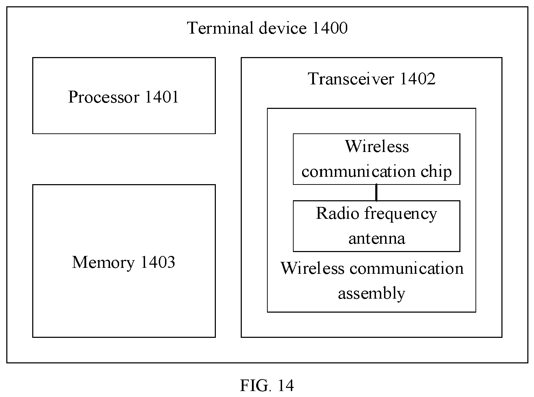

Referring to FIG. 14, a schematic structural diagram of a terminal device according to some embodiments of the present disclosure is illustrated. The terminal device 1400 includes: a processor 1401, a transceiver 1402, and a memory 1403.

The processor 1401 includes one or more processing cores, and the processor 1401 runs various functional applications and performs information processing by running software programs and modules.

The transceiver 1402 includes a receiver and a transmitter, which are practiced, for example, as the same wireless communication assembly that includes a wireless communication chip and a radio frequency antenna.

The memory 1403 is connected to the processor 1401 and the transceiver 1402.

The memory 1403 may be configured to store one or more computer programs run by the processor, and the processor 1401 is configured to run the one or more computer programs to perform the processes in the above method embodiments.

In some embodiments, the processor 1401 is configured to reselect a target resource in a case that the target resource meets a first condition; wherein the target resource corresponds to N consecutive time units in a time domain, N being an integer greater than 1; and

the first condition includes at least one of the following items:

the target resource is not within a first resource set, wherein the first resource set is determined based on first sidelink control information;
a resource corresponding to the target resource is overlapped with a resource determined based on first sidelink control information, and meets an RSRP threshold condition; or
a priority indicated in first sidelink control information is higher than a priority of data transmission and/or higher than a priority threshold.

In some embodiments, the processor 1401 is configured to reselect a target resource in a case that the target resource meets a second condition; wherein the target resource corresponds to N consecutive time units in a time domain, N being an integer greater than 1; and

the second condition includes at least one of the following items:

a resource in the target resource is not within a second resource set, wherein the second resource set is determined based on first sidelink control information;
a resource in the target resource meets a resource exclusion condition; or
a priority indicated in first sidelink control information is higher than a priority of data transmission and/or higher than a priority threshold.

For details not specified in the embodiments, reference is made to the foregoing embodiments, which are not repeated herein.

In addition, the memory may be implemented by any type or combination of volatile or non-volatile storage devices, including, but not limited to: a magnetic or optical disc, an electrically erasable programmable read-only memory, an erasable programmable read-only memory, a static random-access memory, a read-only memory (ROM), a magnetic memory, a flash memory, and a programmable read-only memory.

The embodiments of the present disclosure further provide a computer-readable storage medium storing one or more computer programs therein. The one or more computer programs, when loaded and run by a processor, cause the processor to perform the method for resource reselection described above. In some embodiments, the computer-readable storage medium includes: a ROM, a random-access memory (RAM), a solid state drive (SSD), an optical disk, etc. The RAM includes a resistance random-access memory (ReRAM) and a dynamic random access memory (DRAM).

The embodiments of the present disclosure further provide a chip including one or more programmable logic circuits and/or one or more program instructions. The chip, when running, is caused to perform the method for resource reselection described above.

The embodiments of the present disclosure further provide a computer program product or a computer program. The computer program product or the computer program includes computer instructions stored in a computer-readable storage medium. The computer instructions, when read from the computer-readable storage medium and executed by a processor, cause the processor to perform the method for resource reselection described above.

It should be understood that the term "indication" mentioned in the embodiments of the present disclosure is a direct indication, an indirect indication, or an indication that there is an association relationship. For example, A indicates B, which may mean that A indicates B directly, e.g., B may be acquired by A; or that A indicates B indirectly, e.g., A indicates C by which B may be acquired; or that an association relationship is present between A and B.

In the description of the embodiments of the present disclosure, the term "correspond" indicates a direct or indirect corresponding relationship between two items, or indicates an associated relationship between the two items; and also indicates relationships such as indicating and being indicated, or configuring and being configured.

In some embodiments of the present disclosure, the term "predefined" is implemented by pre-storing corresponding codes, tables, or other means that may be defined to indicate related information in devices (including, for example, terminal devices and network devices), and the present disclosure does not limit the specific implementation thereof. For example, "predefined" refers to "defined" in a protocol.

In some embodiments of the present disclosure, the "protocol" refers to a standard protocol in the communication field including, for example, the LTE protocol, the NR protocol, and related protocols applied in future communication systems, which is not limited in the present disclosure.

The mentioned term "a plurality of" herein means two or more. The term "and/or" describes the association relationship between the associated objects, and indicates that three relationships may be present. For example, the phrase "A and/or B" means (A), (B), or (A and B). The symbol "/" generally indicates an "or" relationship between the associated objects.

Reference herein to "greater than or equal to" may indicate greater than or equal to or just greater than, and "less than or equal to" may indicate less than or equal to or just less than.

In addition, serial numbers of the processes described herein only show an exemplary possible sequence of performing the processes. In some other embodiments, the processes may also be performed out of the numbering sequence, for example, two processes with different serial numbers are performed simultaneously, or two processes with different serial numbers are performed in a reverse order to the illustrated sequence, which is not limited in the present disclosure.

Those skilled in the art should understand that in one or more of the above embodiments, the functions described in the embodiments of the present disclosure may be implemented in hardware, software, firmware, or any combination thereof. The functions, when implemented in software, may be stored in a computer-readable medium or transmitted as one or more instructions or codes on a computer-readable medium. The computer-readable medium includes a computer storage medium and a communication medium, where the communication medium includes any medium that facilitates the transfer of a computer program from one place to another. The storage medium is any available medium that is accessible by a general-purpose or special-purpose computer.

Described above are merely exemplary embodiments of the present disclosure and are not intended to limit the present disclosure. Any modifications, equivalent substitutions, improvements, and the like, made within the spirit and principle of the present disclosure should fall within the protection scope of the present disclosure.

**Claims**

1. A method for resource reselection, applicable to a terminal device, the method comprising:
   reselecting a target resource in a case that the target resource meets a first condition; wherein the target resource corresponds to N consecutive time units in a time domain, N being an integer greater than 1; and the first condition comprises at least one of:

the target resource being not within a first resource set, wherein the first resource set is determined based on first sidelink control information;
a resource corresponding to the target resource being overlapped with a resource determined based on first sidelink control information and meeting a reference signal received power (RSRP) threshold condition; or
a priority indicated in first sidelink control information being higher than at least one of a priority of data transmission or a priority threshold.

2. The method according to claim 1, wherein the target resource is a resource selected by the terminal device but not indicated by transmission of second sidelink control information.

3. The method according to claim 1, wherein the target resource is a resource selected by the terminal device and indicated by transmission of second sidelink control information.

4. The method according to any one of claims 1 to 3, further comprising:

determining a resource selection window and a resource sensing window;
determining an initialized resource set, wherein the initialized resource set comprises at least one first resource within the resource selection window, wherein the at least one first resource corresponds to N consecutive time units in the time domain; and
acquiring a first resource set by excluding the at least one first resource from the initialized resource set by a resource exclusion process, wherein the resource exclusion process comprises at least one of a first exclusion process or a second exclusion process, wherein the first exclusion process is configured to perform resource exclusion based on a non-sensing time unit within the resource sensing window, and the second exclusion process is configured to perform resource exclusion based on first sidelink control information sensed within the resource sensing window.

5. The method according to claim 4, wherein the at least one first resource corresponding to the N consecutive time units in the time domain comprises at least one of:

the at least one first resource corresponding to N consecutive physical time units in the time domain; or
the at least one first resource corresponding to N consecutive time units belonging to a resource pool in the time domain.

6. The method according to claim 4 or 5, wherein the at least one first resource corresponds to U consecutive sub-channels or interlaced resource blocks (IRBs) in a frequency domain, wherein each of the U consecutive sub-channels comprises one or more consecutive IRBs, and U is a positive integer.

7. The method according to claim 6, wherein the U consecutive sub-channels or IRBs are within a same resource block set.

8. The method according to any one of claims 4 to 7, wherein the first exclusion process comprises:

determining Q1 time units corresponding to the non-sensing time unit based on the non-sensing time unit and each resource reservation period in a resource reservation period set configured in a resource pool or in sub-sets of a resource reservation period set, wherein Q1 is a positive integer; and
excluding the at least one first resource from the initialized resource set in a case that the Q1 time units are overlapped with the at least one first resource in the initialized resource set or overlapped with a resource corresponding to the at least one first resource.

9. The method according to any one of claims 4 to 8, wherein the second exclusion process comprises:

excluding the at least one first resource from the initialized resource set in a case that a resource indicated in the first sidelink control information is overlapped with the at least one first resource in the initialized resource set or overlapped with a resource corresponding to the at least one first resource and meets the RSRP threshold condition; or

determining Q2 time units corresponding to a first time unit based on the first time unit in which the first sidelink control information is sensed and a resource reservation period indicated in the first sidelink control information, and assuming that the first sidelink control information with same content is to be received within the Q2 time units, wherein Q2 is a positive integer; and excluding the at least one first resource from the initialized resource set in a case that a resource indicated in the first sidelink control information that is sensed and assumed to be received is overlapped with the at least one first resource in the initialized resource set or overlapped with a resource corresponding to the at least one first resource and meets the RSRP threshold condition.

10. The method according to claim 9, wherein the resource indicated in the first sidelink control information is a resource determined based on at least one of:
a first indication field, indicating a time domain position of the resource;
a second indication field, indicating a frequency domain position of the resource;

a third indication field, indicating whether the resource is transmitted by back-to-back (B2B) transmission; or
a fourth indication field, indicating a transmission round of B2B transmission.

11. The method according to claim 9 or 10, wherein the resource indicated in the first sidelink control information is a resource of one or more single time units or one or more back-to-back (B2B) transmission sets.

12. The method according to any one of claims 8 to 11, wherein the resource corresponding to the at least one first resource is a periodic resource having a same frequency domain position as the at least one first resource and having a fixed time interval from the at least one first resource in a time domain position.

13. The method according to any one of claims 1 to 12, wherein the resource corresponding to the target resource is the target resource, or a periodic resource comprising the target resource and having a resource reservation period of the terminal device as a time interval.

14. The method according to any one of claims 1 to 13, wherein reselecting the target resource comprises:
selecting a remaining first resource from a first resource set to replace the target resource.

15. The method according to any one of claims 1 to 14, wherein N is determined based on at least one of a channel occupancy time (COT) duration, a remaining COT duration, a channel access priority, a priority of data transmission, a channel busy ratio (CBR), or a remaining delay budget.

16. A method for resource reselection, applicable to a terminal device, the method comprising:
reselecting a target resource in a case that the target resource meets a second condition; wherein the target resource corresponds to N consecutive time units in a time domain, N being an integer greater than 1; and the second condition comprises at least one of:

a resource in the target resource being not within a second resource set, wherein the second resource set is determined based on first sidelink control information;
a resource in the target resource meeting a resource exclusion condition; or
a priority indicated in first sidelink control information being higher than at least one of a priority of data transmission or a priority threshold.

17. The method according to claim 16, wherein the target resource is a resource selected by the terminal device but not indicated by transmission of second sidelink control information.

18. The method according to claim 16, wherein the target resource is a resource selected by the terminal device and indicated by transmission of second sidelink control information.

19. The method according to any one of claims 16 to 18, wherein a resource in the target resource being not within a second resource set comprises at least one of:

the target resource comprising a resource of a single time unit not within the second resource set;
a number of resources of single time units not within the second resource set in the target resource being greater than or equal to a first threshold;
a number of resources of consecutive single time units not within the second resource set in the target resource being greater than or equal to a second threshold; or
none of resources of single time units in the target resource being within the second resource set.

20. The method according to any one of claims 16 to 19, wherein a resource in the target resource meeting a resource exclusion condition comprises at least one of:

the target resource comprising a resource of a single time unit meeting the resource exclusion condition;
a number of resources of single time units meeting the resource exclusion condition in the target resource being greater than or equal to a third threshold;
a number of resources of consecutive single time units meeting the resource exclusion condition in the target resource being greater than or equal to a fourth threshold; or
resources of single time units in the target resource all meeting the resource exclusion condition.

21. The method according to claim 20, wherein the resource exclusion condition comprises a resource corresponding to the resource of the single time unit being overlapped with a resource determined based on first sidelink control information and meeting a reference signal received power (RSRP) threshold condition.

22. The method according to claim 21, wherein the resource corresponding to the resource of the single time unit is the resource of the single time unit, or periodic resources comprising the resource of the single time unit and having a resource reservation period of the terminal device as a time interval.

23. The method according to claim 21 or 22, wherein the resource determined based on the first sidelink control information is a resource indicated in monitored first sidelink control information or a resource indicated in first sidelink control information that is monitored and assumed to be received.

24. The method according to claim 16 or 23, further comprising:

determining a resource selection window and a resource sensing window;
determining an initialized resource set, wherein the initialized resource set comprises at least one second resource within the resource selection window, wherein the at least one second resource is a resource of a single time unit; and
acquiring a second resource set by excluding the at least one second resource from the initialized resource set by a resource exclusion process, wherein the resource exclusion process comprises at least one of a first exclusion process or a second exclusion process, wherein the first exclusion process is configured to perform resource exclusion based on a non-sensing time unit within the resource sensing window, and the second exclusion process is configured to perform resource exclusion based on first sidelink control information sensed within the resource sensing window.

25. The method according to claim 24, wherein the at least one second resource corresponds to U consecutive sub-channels or interlaced resource blocks (IRBs) in a frequency domain, wherein each of the U consecutive sub-channels comprises one or more consecutive IRBs, and U is a positive integer.

26. The method according to claim 25, wherein the U consecutive sub-channels or IRBs are within a same resource block set.

27. The method according to any one of claims 24 to 26, wherein the first exclusion process comprises:

determining Q1 time units corresponding to the non-monitored time unit based on the non-monitored time unit and each resource reservation period in a resource reservation period set configured in a resource pool or in sub-sets of a resource reservation period set, wherein Q1 is a positive integer; and
excluding the at least one second resource from the resource set in a case that the Q1 time units are overlapped with the at least one second resource in the resource set or overlapped with a resource corresponding to the at least one second resource.

28. The method according to any one of claims 24 to 27, wherein the second exclusion process comprises:

excluding the at least one second resource from the resource set in a case that a resource indicated in the first sidelink control information is overlapped with the at least one second resource in the resource set or overlapped with a resource corresponding to the at least one second resource and meeting a reference signal received power (RSRP) threshold condition; or

determining Q2 time units corresponding to a first time unit based on the first time unit in which the first sidelink control information is monitored and a resource reservation period indicated in the first sidelink control information, and assuming that the first sidelink control information with same content is to be received within the Q2 time units, wherein Q2 is a positive integer; and excluding the at least one second resource from the resource set in a case that a resource indicated in the first sidelink control information that is monitored and assumed to be received is overlapped with the at least one second resource in the resource set or overlapped with a resource corresponding to the at least one second resource and meets a reference signal received power (RSRP) threshold condition.

29. The method according to claim 28, wherein the resource indicated in the first sidelink control information is a resource determined based on at least one of:

a first indication field, indicating a time domain position of the resource;
a second indication field, indicating a frequency domain position of the resource;
a third indication field, indicating whether the resource is transmitted by back-to-back (B2B) transmission; or
a fourth indication field, indicating a transmission round of B2B transmission.

30. The method according to claim 28 or 29, wherein the resource indicated in the first sidelink control information is a transmission resource of one or more single time units or one or more back-to-back (B2B) transmission sets.

31. The method according to any one of claims 27 to 30, wherein the resource corresponding to the at least one second resource is periodic resources having a same frequency domain position as the at least one second resource and having a fixed time interval from the at least one second resource in a time domain position.

32. The method according to any one of claims 24 to 31, wherein acquiring the second resource set by excluding the at least one second resource from the resource set by the resource exclusion process comprises:
upon excluding the at least one second resource from the resource set by the resource exclusion process, raising a reference signal received power (RSRP) threshold by H dB in a case that the resource set meets at least one of a third condition or a fourth condition, initiating the resource set, and excluding the at least one second resource from the resource set by performing the resource exclusion process again; or determining the resource set as the second resource set in a case that the resource set does not meet at least one of a third condition or a fourth condition; wherein the third condition comprises a number of remaining second resources in the resource set being less than $X*M_{total}$, and the fourth condition comprises a number of second resources meeting a fifth condition in the resource set being less than a fifth threshold, wherein the fifth condition comprises at least M consecutive time units starting from a time unit of the at least one second resource comprising a non-excluded second resource, $M_{total}$ is a total number of second resources in the resource set, and M is a positive integer.

33. The method according to any one of claims 16 to 32, wherein the N consecutive time units are N consecutive physical time units or N consecutive time units belonging to a resource pool.

34. The method according to any one of claims 16 to 33, wherein reselecting the target resource comprises:
selecting a remaining second resource from the second resource set to replace the target resource.

35. The method according to claim 34, wherein selecting the remaining second resource from the second resource set to replace the target resource comprises:
prioritizing selecting consecutive second resources in the time domain from the second resource set to replace the target resource.

36. An apparatus for resource reselection, comprising:
a reselecting module, configured to reselect a target resource in a case that the target resource meets a first condition; wherein the target resource corresponds to N consecutive time units in a time domain, N being an integer greater than 1; and the first condition comprises at least one of:

the target resource being not within a first resource set, wherein the first resource set is determined based on first sidelink control information;
a resource corresponding to the target resource being overlapped with a resource determined based on first sidelink control information and meeting a reference signal received power (RSRP) threshold condition; or
a priority indicated in first sidelink control information being higher than at least one of a priority of data transmission or a priority threshold.

37. The apparatus according to claim 36, wherein the target resource is a resource selected by a terminal device but not indicated by transmission of second sidelink control information.

38. The apparatus according to claim 36, wherein the target resource is a resource selected by a terminal device and indicated by transmission of second sidelink control information.

39. The apparatus according to any one of claims 36 to 38, further comprising: an excluding module, wherein the excluding module is configured to:

determine a resource selection window and a resource sensing window;
determine an initialized resource set, wherein the initialized resource set comprises at least one first resource within the resource selection window, wherein the at least one first resource corresponds to N consecutive time units in the time domain; and
acquire a first resource set by excluding the at least one first resource from the initialized resource set by a resource exclusion process, wherein the resource exclusion process comprises at least one of a first exclusion process or a second exclusion process, wherein the first exclusion process is configured to perform resource exclusion based on a non-monitored time unit within the resource sensing window, and the second exclusion process is configured to perform resource exclusion based on first sidelink control information monitored within the resource sensing window.

40. The apparatus according to claim 39, wherein the at least one first resource corresponding to the N consecutive time units in the time domain comprises at least one of the following cases:

the at least one first resource corresponds to N consecutive physical time units in the time domain; or
the at least one first resource corresponds to N consecutive time units belonging to a resource pool in the time domain.

41. The apparatus according to claim 39 or 40, wherein the at least one first resource corresponds to U consecutive sub-channels or interlaced resource blocks (IRBs) in a frequency domain, wherein each of the U consecutive sub-channels comprises one or more consecutive IRBs, and U is a positive integer.

42. The apparatus according to claim 41, wherein the U consecutive sub-channels or IRBs are within a same resource block set.

43. The apparatus according to any one of claims 39 to 42, wherein the first exclusion process comprises:

determining Q1 time units corresponding to the non-monitored time unit based on the non-monitored time unit and each resource reservation period in a resource reservation period set configured in a resource pool or in sub-sets of a resource reservation period set, wherein Q1 is a positive integer; and
excluding the at least one first resource from the resource set in a case that the Q1 time units are overlapped with the at least one first resource in the resource set or overlapped with a resource corresponding to the at least one first resource.

44. The apparatus according to any one of claims 39 to 43, wherein the second exclusion process comprises:

excluding the at least one first resource from the resource set in a case that a resource indicated in the first sidelink control information is overlapped with the at least one first resource in the resource set or overlapped with a resource corresponding to the at least one first resource and meets the RSRP threshold condition; or
determining Q2 time units corresponding to a first time unit based on the first time unit in which the first sidelink control information is monitored and a resource reservation period indicated in the first sidelink control information, and assuming that the first sidelink control information with same content is to be received within the Q2 time units, wherein Q2 is a positive integer; and excluding the at least one first resource from the resource set in a case that a resource indicated in the first sidelink control information that is monitored and assumed to be received is overlapped with the at least one first resource in the resource set or overlapped with a resource corresponding to the at least one first resource and meets the RSRP threshold condition.

45. The apparatus according to claim 44, wherein the resource indicated in the first sidelink control information is a resource determined based on at least one of:

a first indication field, indicating a time domain position of the resource;
a second indication field, indicating a frequency domain position of the resource;
a third indication field, indicating whether the resource is transmitted by back-to-back (B2B) transmission; or
a fourth indication field, indicating a transmission round of B2B transmission.

46. The apparatus according to claim 44 or 45, wherein the resource indicated in the first sidelink control information is a resource of one or more single time units or one or more back-to-back (B2B) transmission sets.

47. The apparatus according to any one of claims 43 to 46, wherein the resource corresponding to the at least one first resource is periodic resources having a same frequency domain position as the at least one first resource and having a fixed time interval from the at least one first resource in a time domain position.

48. The apparatus according to any one of claims 36 to 47, wherein the resource corresponding to the target resource is the target resource, or periodic resources comprising the target resource and having a resource reservation period of a terminal device as a time interval.

49. The apparatus according to any one of claims 36 to 48, wherein the reselecting module is further configured to select a remaining first resource from a first resource set to replace the target resource.

50. The apparatus according to any one of claims 36 to 49, wherein N is determined based on at least one of a channel occupancy time (COT) duration, a remaining COT duration, a channel access priority, a priority of data transmission, a channel busy ratio (CBR), or a remaining delay budget.

51. An apparatus for resource reselection, comprising:
a reselecting module, configured to reselect a target resource in a case that the target resource meets a second condition; wherein the target resource corresponds to N consecutive time units in a time domain, N being an integer greater than 1; and the second condition comprises at least one of:

a resource in the target resource being not within a second resource set, wherein the second resource set is determined based on first sidelink control information;
a resource in the target resource meeting a resource exclusion condition; or
a priority indicated in first sidelink control information being higher than at least one of a priority of data transmission or a priority threshold.

52. The apparatus according to claim 51, wherein the target resource is a resource selected by a terminal device but not indicated by transmission of second sidelink control information.

53. The apparatus according to claim 51, wherein the target resource is a resource selected by a terminal device and indicated by transmission of second sidelink control information.

54. The apparatus according to any one of claims 51 to 53, wherein a resource in the target resource being not within a second resource set comprises at least one of:

the target resource comprising a resource of a single time unit not within the second resource set;
a number of resources of single time units not within the second resource set in the target resource being greater than or equal to a first threshold;
a number of resources of consecutive single time units not within the second resource set in the target resource being greater than or equal to a second threshold; or
none of resources of single time units in the target resource being within the second resource set.

55. The apparatus according to any one of claims 51 to 54, wherein a resource in the target resource meeting a resource exclusion condition comprises at least one of:

the target resource comprising a resource of a single time unit meeting the resource exclusion condition;
a number of resources of single time units meeting the resource exclusion condition in the target resource being greater than or equal to a third threshold;
a number of resources of consecutive single time units meeting the resource exclusion condition in the target resource being greater than or equal to a fourth threshold; or
resources of single time units in the target resource all meeting the resource exclusion condition.

56. The apparatus according to claim 55, wherein the resource exclusion condition comprises a resource corresponding to the resource of the single time unit being overlapped with a resource determined based on first sidelink control information and a reference signal received power (RSRP) threshold condition being met.

57. The apparatus according to claim 56, wherein the resource corresponding to the resource of the single time unit is the resource of the single time unit, or periodic resources comprising the resource of the single time unit and having a resource reservation period of a terminal device as a time interval.

58. The apparatus according to claim 56 or 57, wherein the resource determined based on the first sidelink control information is a resource indicated in monitored first sidelink control information or a resource indicated in first sidelink control information that is monitored and assumed to be received.

59. The apparatus according to claim 51 or 58, further comprising: an excluding module, wherein the excluding module is configured to:

determine a resource selection window and a resource sensing window;
determine an initialized resource set, wherein the initialized resource set comprises at least one second resource within the resource selection window, wherein the at least one second resource is a resource of a single time unit; and
acquire a second resource set by excluding the at least one second resource from the initialized resource set by a resource exclusion process, wherein the resource exclusion process comprises at least one of a first exclusion process or a second exclusion process, wherein the first exclusion process is configured to perform resource exclusion based on a non-monitored time unit within the resource sensing window, and the second exclusion process is configured to perform resource exclusion based on first sidelink control information monitored within the resource sensing window.

60. The apparatus according to claim 59, wherein the at least one second resource corresponds to U consecutive sub-channels or interlaced resource blocks (IRBs) in a frequency domain, wherein each of the U consecutive sub-channels comprises one or more consecutive IRBs, and U is a positive integer.

61. The apparatus according to claim 60, wherein the U consecutive sub-channels or IRBs are within a same resource block set.

62. The apparatus according to any one of claims 59 to 61, wherein the first exclusion process comprises:

determining Q1 time units corresponding to the non-monitored time unit based on the non-monitored time unit and each resource reservation period in a resource reservation period set configured in a resource pool or in sub-sets of a resource reservation period set, wherein Q1 is a positive integer; and
excluding the at least one second resource from the resource set in a case that the Q1 time units are overlapped with the at least one second resource in the resource set or overlapped with a resource corresponding to the at least one second resource.

63. The apparatus according to any one of claims 59 to 62, wherein the second exclusion process comprises:

excluding the at least one second resource from the resource set in a case that a resource indicated in the first sidelink control information is overlapped with the at least one second resource in the resource set or overlapped with a resource corresponding to the at least one second resource and meets a reference signal received power (RSRP) threshold condition; or
determining Q2 time units corresponding to a first time unit based on the first time unit in which the first sidelink control information is monitored and a resource reservation period indicated in the first sidelink control information, and assuming that the first sidelink control information with same content is to be received within the Q2 time units, wherein Q2 is a positive integer; and excluding the at least one second resource from the resource set in a case that a resource indicated in the first sidelink control information that is monitored and assumed to be received is overlapped with the at least one second resource in the resource set or overlapped with a resource corresponding to the at least one second resource and meets a reference signal received power (RSRP) threshold condition.

64. The apparatus according to claim 63, wherein the resource indicated in the first sidelink control information is a resource determined based on at least one of:

a first indication field, indicating a time domain position of the resource;
a second indication field, indicating a frequency domain position of the resource;
a third indication field, indicating whether the resource is transmitted by back-to-back (B2B) transmission; or
a fourth indication field, indicating a transmission round of B2B transmission.

65. The apparatus according to claim 63 or 64, wherein the resource indicated in the first sidelink control information is a transmission resource of one or more single time units or one or more back-to-back (B2B) transmission sets.

66. The apparatus according to any one of claims 62 to 65, wherein the resource corresponding to the at least one second resource is periodic resources having a same frequency domain position as the at least one second resource and having a fixed time interval from the at least one second resource in a time domain position.

67. The apparatus according to any one of claims 59 to 66, wherein the excluding module is further configured to: upon excluding the at least one second resource from the resource set by the resource exclusion process, raise a reference signal received power (RSRP) threshold by H dB in a case that the resource set meets at least one of a third condition or a fourth condition, initiate the resource set, and exclude the at least one second resource from the resource set by performing the resource exclusion process again; or determine the resource set as the second resource set in a case that the resource set does not meet at least one of a third condition or a fourth condition; wherein the third condition comprises a number of remaining second resources in the resource set being less than $X*M_{total}$, and the fourth condition comprises a number of second resources meeting a fifth condition in the resource set being less than a fifth threshold, wherein the fifth condition comprises at least M consecutive time units starting from a time unit of the at least one second resource comprising a non-excluded second resource, $M_{total}$ is a total number of second resources in the resource set, and M is a positive integer.

68. The apparatus according to any one of claims 51 to 68, wherein the N consecutive time units are N consecutive physical time units or N consecutive time units belonging to a resource pool.

69. The apparatus according to any one of claims 51 to 68, wherein the reselecting module is further configured to select a remaining second resource from the second resource set to replace the target resource.

70. The apparatus according to claim 69, wherein the reselecting module is further configured to prioritize selecting consecutive second resources in the time domain from the second resource set to replace the target resource.

71. A terminal device, comprising: a processor and a memory storing one or more computer programs, wherein the processor, when loading and running the one or more computer programs, is caused to perform the method as defined in any one of claims 1 to 35.

72. A computer-readable storage medium, storing one or more computer programs, wherein the one or more computer programs, when loaded and run by a processor, cause the processor to perform the method as defined in any one of claims 1 to 35.

73. A chip, comprising: one or more programmable logic circuits and/or one or more program instructions, wherein the chip, when running, is caused to perform the method as defined in any one of claims 1 to 35.

74. A computer program product, comprising: one or more computer instructions stored in a computer-readable storage medium, wherein the one or more computer instructions, when read from the computer-readable storage medium and executed by a processor, cause the processor to perform the method as defined in any one of claims 1 to 35.

FIG. 1

▨ PSSCH

▨ PSCCH

FIG. 2

PSSCH ▨    PSCCH ▦

**TB1**

Initial
transmission    Retransmission 1    Retransmission 2

**TB2**

Initial
transmission    Retransmission 1    Retransmission 2

FIG. 3

(a)

20                                          10

n-$T_0$                    $t_m$    n    n+$T_1$                    n+$T_2$    t

R(x,y)

(b)

20                              10

n-$T_0$        z        $t_m$    n    n+$T_1$    $t_{m+Prxlg}$    n+$T_2$    t

E(v,m)    1        2        3        4        5    6

R(x,y)

FIG. 4

Interlace 0    Interlace 1

FIG. 5

FIG. 6

FIG. 7

$$m-T_3-T_{proc,0} \qquad m-T_3+T_1$$

20 ... 10

$$m-T_3-T_0 \qquad n \qquad m-T_3 \qquad m \qquad m-T_3+T_2 \quad t$$

FIG. 8

910

Reselecting a target resource in a case that the target resource meets a first condition; wherein the target resource corresponds to N consecutive time units in a time domain, N being an integer greater than 1; and

the first condition includes at least one of the following items:

the target resource is not within a first resource set, wherein the first resource set is determined based on first sidelink control information;

a resource corresponding to the target resource is overlapped with a resource determined based on first sidelink control information and meets an RSRP threshold condition; or

a priority indicated in first sidelink control information is higher than a priority of data transmission and/or higher than a priority threshold

FIG. 9

(a)

(b)

FIG. 10

Reselecting a target resource in a case that the target resource meets a second condition; wherein the target resource corresponds to N consecutive time units in a time domain, N being an integer greater than 1; and

the second condition includes at least one of the following items:

a resource in the target resource is not within a second resource set, wherein the second resource set is determined based on first sidelink control information;

a resource in the target resource meets a resource exclusion condition; or

a priority indicated in first sidelink control information is higher than a priority of data transmission and/or higher than a priority threshold

1110

FIG. 11

FIG. 12

FIG. 13

Terminal device 1400

Processor 1401

Transceiver 1402

Wireless communication chip

Radio frequency antenna

Wireless communication assembly

Memory 1403

FIG. 14

## INTERNATIONAL SEARCH REPORT

| | International application No. |
|---|---|
| | **PCT/CN2022/106323** |

| A. | CLASSIFICATION OF SUBJECT MATTER |
|---|---|
| | H04W 72/02(2009.01)i |

According to International Patent Classification (IPC) or to both national classification and IPC

| B. | FIELDS SEARCHED |
|---|---|

Minimum documentation searched (classification system followed by classification symbols)

H04W H04L

Documentation searched other than minimum documentation to the extent that such documents are included in the fields searched

Electronic data base consulted during the international search (name of data base and, where practicable, search terms used)

CNTXT; ENTXT; WPABS; 3GPP; CNKI: 重选, 重新, 资源, 窗口, 排除, 周期, 侦听, 监听, 集, 重叠, 重复, 阈值, 优先级, 侧行控制信息, 直通, 侧, 旁, 边, 副, 链路, 参考信号接收功率, V2X, re-select, reselect, resource, window, excul+, sens+, monitor +, detect+, set, pool, overlap+, threshold, priority, sidelink, SCI, RSRP

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2022061774 A1 (GUANGDONG OPPO MOBILE TELECOMMUNICATIONS CORP., LTD.) 31 March 2022 (2022-03-31)<br>description, pages 4-11 | 1-74 |
| X | WO 2022140934 A1 (GUANGDONG OPPO MOBILE TELECOMMUNICATIONS CORP., LTD.) 07 July 2022 (2022-07-07)<br>page 8, lines 14-40 | 1-74 |
| X | QUALCOMN INC. ""R1-2004452_Mode2 Resource Allocation""<br>*3GPP tsg_ran\wg1_r11*, 16 May 2020 (2020-05-16),<br>sections 1-5 | 1-74 |
| X | APPLE. ""R1-2000852 Remaining Details on Mode 2 Resource Allocation""<br>*3GPP tsg_ran\wg1_r11*, 15 February 2020 (2020-02-15),<br>sections 1-3 | 1-74 |
| X | Moderator MediaTek. "R4-2002306 "Email discussion summary for RAN4#94e_#52_5G_V2X_NRSL_RRM_Part_2""<br>*3GPP tsg_ran\wg4_radio*, 06 March 2020 (2020-03-06),<br>section 1 | 1-74 |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **08 November 2022** | **29 November 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2022/106323**

| Patent document cited in search report | | | Publication date (day/month/year) | Patent family member(s) | Publication date (day/month/year) |
|---|---|---|---|---|---|
| WO | 2022061774 | A1 | 31 March 2022 | None | |
| WO | 2022140934 | A1 | 07 July 2022 | None | |

Form PCT/ISA/210 (patent family annex) (January 2015)